# EUROPEAN PATENT APPLICATION

(11) **EP 4 207 707 A1**
(43) Date of publication of application: **05.07.2023**
(21) Application number: 20954655.5
(22) Date of filing: 27.09.2020
(51) Int. Cl.: H04L 65/40

(54) **DATA TRANSMISSION SYSTEM, DATA TRANSMISSION METHOD, SMART VEHICLE AND DEVICE**

(71) Applicant: Huawei Technologies Co., Ltd., Shenzhen, Guangdong 518129 (CN)
(72) Inventor: LIU, Qiong, Shenzhen, Guangdong 518129 (CN); LI, Zhen, Shenzhen, Guangdong 518129 (CN); MA, Tao, Shenzhen, Guangdong 518129 (CN); SUN, Hongxing, Shenzhen, Guangdong 518129 (CN)
(74) Representative: Goddar, Heinz J.
(86) International application number: PCT/CN2020/118080
(87) International publication number: WO 2022/061804

(57) **Abstract**

Embodiments of this application disclose a data transmission system, including an over the air OTA server, a master electronic control unit ECU, and a node ECU. The OTA server is configured to invoke a first interface of the master ECU. The master ECU is configured to obtain a size of a target software package in response to a fact that the OTA server invokes the first interface. The master ECU is further configured to invoke a second interface of the node ECU. The node ECU is configured to: in response to a fact that the master ECU invokes the second interface, obtain the size of the target software package and check remaining storage space of the node ECU, and when the remaining storage space is not less than the size of the target software package, receive the target software package sent by the OTA server. The solutions provided in this application may be applied to an intelligent vehicle, a connected vehicle, a new energy vehicle, and an autonomous driving vehicle. According to the solutions provided in this application, in a process of implementing in-vehicle software upgrade by using an OTA technology, dependence on a storage capability and a processing capability of the master ECU is reduced, and upgrade efficiency is improved.

## Description

### TECHNICAL FIELD

This application relates to the field of vehicle network technologies, and in particular, to a data transmission system, a data transmission method, an intelligent vehicle, and an apparatus.

### BACKGROUND

An automotive open system architecture (Automotive Open System Architecture, AutoSar) is an open and standardized software architecture jointly established by global automobile manufacturers, component suppliers, and electronic software system companies. It is a summary of the experience in automotive technologies developed for more than 100 years. The AutoSar defines a series of system service interfaces. These interfaces can be used to implement compatibility and interoperability of different software, thereby simplifying automotive software development and facilitating software deployment on vehicles of different models.

In the AutoSar, upgrade of software in a vehicle can be implemented by using the over the air (over the air, OTA) technology. A software package can be downloaded from a cloud server to the local by using the OTA technology. Because a vehicle includes a plurality of electronic control units (electronic control units, ECUs), and the plurality of ECUs each have a software upgrade requirement, an update and configuration management master (update and configuration management master, UCM Master) module needs to be installed on at least one of the plurality of ECUs, and an update and configuration management (update and configuration management, UCM) module needs to be installed on each of the other ECUs having the software upgrade requirement. The software package is downloaded, by using the OTA technology, from the cloud server to the ECU installed with the UCM Master module, and then is distributed by the ECU installed with the UCM Master module to the plurality of ECUs each installed with the UCM module, to complete software upgrade of the entire vehicle.

### SUMMARY

Embodiments of this application provide a data transmission system, a data transmission method, an intelligent vehicle, and an apparatus. According to the solutions provided in this application, in a process of implementing in-vehicle software upgrade by using the OTA technology, dependence on a storage capability and a processing capability of a master ECU is reduced, and upgrade efficiency is improved.

To achieve the foregoing objective, the following technical solutions are provided in the embodiments of this application.

According to a first aspect, this application provides a data transmission system. The data transmission system includes an over the air OTA server, a master electronic control unit ECU, and a node ECU. The OTA server is configured to invoke a first interface of the master ECU. An interface may be understood as an interaction method and rule between a first device and a second device. The master ECU is configured to obtain a size of a target software package in response to a fact that the OTA server invokes the first interface. In this application, the target software package is alternatively sometimes referred to as a software package for short, or is referred to as an upgrade package or a software upgrade package. The software package includes data for upgrading the node ECU. In other words, the OTA server may send the size of the target software package to the master ECU by invoking the first interface of the master ECU. The master ECU is further configured to invoke a second interface of the node ECU. The node ECU is configured to: in response to a fact that the master ECU invokes the second interface, obtain the size of the target software package and check remaining storage space of the node ECU, and when the remaining storage space is not less than the size of the target software package, receive the target software package sent by the OTA server. The data transmission system provided in this application may be an AutoSar. When the data transmission system provided in this application is the AutoSar, the master ECU is an ECU on which a UCM Master module is installed in ECUs in a vehicle, the node ECU is an ECU on which a UCM module is installed in the ECUs in the vehicle, and an interface may also be understood as an interaction method and rule between a first module of the first device and a second module of the second device. In the solution provided in this application, the OTA server may learn, in a plurality of manners, whether to send a software package of a first ECU to the first ECU. It can be learned from the first aspect that, in the solution according to the first aspect, the target software package of the node ECU is directly sent by the OTA server to the node ECU, and the master ECU does not need to buffer a software package of the node ECU and does not need to forward an upgrade package of the node ECU. In this manner, the master ECU does not need to have relatively large storage space or relatively high processing performance. In a process of implementing in-vehicle software upgrade by using an OTA technology, dependence on a storage capability and a processing capability of the master ECU is reduced.

Optionally, with reference to the first aspect, in a first possible implementation, the node ECU is further configured to return a first invocation result to the master ECU. The first invocation result includes a first parameter value, and the first parameter value is used to indicate that the remaining storage space of the node ECU is not less than the size of the target software package. The master ECU is further configured to invoke a third interface of the OTA server when obtaining the first parameter value. The OTA server is further configured to send the target software package to the node ECU in response to a fact that the master ECU invokes the third interface. It can be learned from the first possible implementation of the first aspect that a specific manner is provided, so that the OTA server learns that the OTA server is to directly send the target software package to the node ECU. A manner in which the first parameter value is added to the first invocation result may be used, so that the OTA server learns that the OTA server is to directly send the target software package to the node ECU.

Optionally, with reference to the first possible implementation of the first aspect, in a second possible implementation, the second interface is a transfer start TransferStart interface. The TransferStart interface is an interface defined in the AutoSar. In the second possible implementation of the first aspect, a parameter is added to an invocation result of the existing TransferStart interface defined by the AutoSar, and the parameter may be used to indicate the OTA server to send the target software package to the node ECU. It can be learned from the second possible implementation of the first aspect that, in this solution, an existing software upgrade procedure specified by the AutoSar is slightly changed. A parameter is added to an invocation result of a TransferStart interface of the node ECU, and the parameter is fed back to the OTA server, so that the OTA server learns that distributed download can be performed, and directly sends the target software package of the node ECU to the node ECU without using the master ECU.

Optionally, with reference to the first aspect, the first possible implementation of the first aspect, or the second possible implementation of the first aspect, in a third possible implementation, a quantity of node ECUs is N, and N is an integer greater than 1. The master ECU is specifically configured to invoke the third interface of the OTA server when obtaining N first parameter values. It can be learned from the third possible implementation of the first aspect that, when the data transmission system includes a plurality of node ECUs, the master ECU invokes the third interface of the OTA server only when the master ECU learns that remaining storage space of each node ECU in the plurality of node ECUs is not less than a size of a software package of each node ECU, so that the OTA server sends the software package to each node ECU. After the third interface of the OTA server is invoked, the OTA server may separately send the software package to each node ECU, or may simultaneously send respective software packages to the plurality of node ECUs. It can be learned from the third possible implementation of the first aspect that the master ECU may learn in advance whether remaining storage space of all the node ECUs is sufficient, and only when the remaining storage space of all the node ECUs is sufficient to store the respective software packages, the software packages are transmitted. This prevents an upgrade failure caused by insufficiency of resources of some node ECUs in a download process, and reduces user traffic consumption and resource waste caused by the upgrade failure. In addition, in this implementation, the second interface may be understood as an interface newly defined in the AutoSar in this solution. The master ECU may invoke second interfaces of the plurality of node ECUs, to obtain a plurality of first invocation results at a time.

Optionally, with reference to the first aspect, the first possible implementation of the first aspect, or the second possible implementation of the first aspect, in a fourth possible implementation, a quantity of node ECUs is N, and N is an integer greater than 1. The master ECU is specifically configured to not invoke the third interface of the OTA server when obtaining M first parameter values, and M is an integer less than N and greater than 1. It can be learned from the third possible implementation of the first aspect that, when the master ECU does not learn that remaining storage space of each node ECU in the plurality of node ECUs is not less than a size of a software package of each node ECU, the master ECU does not invoke the third interface of the OTA server. In other words, if remaining storage space of some node ECUs in the plurality of node ECUs is insufficient to store software packages of the node ECUs, the OTA server does not send a software package to any node ECU in the plurality of node ECUs. This prevents an upgrade failure caused by insufficiency of resources of some node ECUs in a download process, and reduces user traffic consumption and resource waste caused by the upgrade failure.

Optionally, with reference to the first aspect, in a fifth possible implementation, the master ECU is further configured to obtain a download address of the target software package in response to a fact that the OTA server invokes the first interface. The node ECU is further configured to return a first invocation result to the master ECU. The first invocation result includes a first parameter value, and the first parameter value is used to indicate that the remaining storage space of the node ECU is not less than the size of the target software package. It can be learned from the fourth possible implementation of the first aspect that a specific manner is provided, so that the OTA server learns that the OTA server is to directly send the target software package to the node ECU, and the OTA server may send the download address of the target software package of the node ECU to the master ECU; and when the remaining storage space of the node ECU is sufficient to store the target software package of the node ECU, the master ECU sends the download address to the node ECU, so that the node ECU may request, based on the download address, the OTA server to send the target software package of the node ECU.

Optionally, with reference to the fifth possible implementation of the first aspect, in a sixth possible implementation, the first interface is a transfer vehicle package TransferVehiclePackage interface. The TransferVehiclePackage interface is an interface defined in the AutoSar. In the sixth possible implementation of the first aspect, in this solution, the download address of the target software package is added to an existing TransferVehiclePackage interface, so that the master ECU may obtain the download address of the target software package by using the TransferVehiclePackage interface. This provides a specific manner in which the OTA server directly sends the software package to the node ECU based on the AutoSar, so that the diversity of the solution is improved.

Optionally, with reference to the fifth possible implementation of the first aspect or the sixth possible implementation of the first aspect, in a seventh possible implementation, a quantity of node ECUs is N, and N is an integer greater than 1. The master ECU is specifically configured to invoke fourth interfaces of the node ECUs when obtaining N first parameter values. It can be learned from the seventh possible implementation of the first aspect that, when the data transmission system includes a plurality of node ECUs, the master ECU invokes the fourth interfaces of the node ECUs only when the master ECU learns that remaining storage space of each node ECU in the plurality of node ECUs is not less than a size of a software package of each node ECU, so that the node ECUs obtain download addresses of the software packages. When the master ECU learns that the remaining storage space of each node ECU in the plurality of node ECUs is not less than the size of the software package of each node ECU, each node ECU may be enabled to obtain the download address of the software package of each node ECU according to a software package sending sequence obtained from the OTA. Alternatively, the download addresses of the respective software packages may be sent to the plurality of node ECUs at the same time. It can be learned from the seventh possible implementation of the first aspect that, only when the remaining storage space of all the node ECUs is sufficient to store the respective software packages, the software packages are transmitted. This prevents an upgrade failure caused by insufficiency of resources of some node ECUs in a download process, and reduces user traffic consumption and resource waste caused by the upgrade failure.

Optionally, with reference to the fifth possible implementation of the first aspect or the sixth possible implementation of the first aspect, in an eighth possible implementation, a quantity of node ECUs is N, and N is an integer greater than 1. The master ECU is specifically configured to not invoke fourth interfaces of the node ECUs when obtaining M first parameter values, and M is an integer less than N and greater than 1. It can be learned from the eighth possible implementation of the first aspect that, when the master ECU does not learn that remaining storage space of each node ECU in the plurality of node ECUs is not less than a size of a software package of each node ECU, the fourth interfaces of the node ECUs are not invoked. In other words, if remaining storage space of some node ECU s in the plurality of node ECUs is insufficient to store software packages of the node ECUs, the master ECU does not send a download address of a software package of any node in the plurality of node ECUs to the node. This prevents an upgrade failure caused by insufficiency of resources of some node ECUs in a download process, and reduces user traffic consumption and resource waste caused by the upgrade failure.

Optionally, with reference to the first aspect or the first possible implementation of the first aspect to the sixth possible implementation of the first aspect, in a ninth possible implementation, the data transmission system is a data transmission system based on the AutoSar.

Optionally, with reference to the first aspect or the first possible implementation of the first aspect to the sixth possible implementation of the first aspect, in a tenth possible implementation, the node ECU is further configured to send a prompt message. The prompt message is used to indicate that the node ECU downloads the target software package from the OTA server.

Optionally, with reference to the first aspect or the first possible implementation of the first aspect to the sixth possible implementation of the first aspect, in an eleventh possible implementation, the master ECU is further configured to send a prompt message. The prompt message is used to indicate that the node ECU downloads the target software package from the OTA server.

According to a second aspect, this application provides an over the air OTA server. The OTA server includes an update and configuration management UCM module. The UCM module is configured to invoke a first interface of a master ECU, so that the master ECU obtains a size of a target software package in response to a fact that the OTA server invokes the first interface, and the master ECU invokes a second interface of a node ECU, so that the node ECU obtains the size of the target software package and checks remaining storage space of the node ECU in response to a fact that the master ECU invokes the second interface, and when the remaining storage space is not less than the size of the target software package, the node ECU receives the target software package sent by the OTA server.

Optionally, with reference to the second aspect, in a first possible implementation, the UCM module is further configured to send the target software package to the node ECU in response to a fact that the master ECU invokes a third interface of the UCM module. The third interface is an interface that is of the UCM module and that is invoked by the master ECU when the master ECU obtains a first parameter value, the first parameter value is a parameter value included in a first invocation result returned by the node ECU to the master ECU, and the first parameter value is used to indicate that the remaining storage space of the node ECU is not less than the size of the target software package.

Optionally, with reference to the second aspect, in a second possible implementation, the UCM module is further configured to invoke the first interface of the master ECU, so that the master ECU obtains a download address of the target software package in response to a fact that the OTA server invokes the first interface, and then the node ECU obtains the download address of the target software package and invokes a fifth interface of the OTA server in response to a fact that the master ECU invokes a fourth interface. The UCM module is further configured to: receive the download address of the target software package and send the target software package to the node ECU according to the download address in response to a fact that the node ECU invokes the fifth interface of the UCM module.

According to a third aspect, this application provides a master electronic control unit ECU. The master ECU includes an update and configuration management master UCM Master module. The UCM Master module is configured to obtain a size of a target software package in response to a fact that an OTA server invokes a first interface of the UCM Master module. The UCM Master module is further configured to invoke a second interface of a node ECU, so that the node ECU obtains the size of the target software package and checks remaining storage space of the node ECU in response to a fact that the second interface is invoked, and when the remaining storage space is not less than the size of the target software package, the node ECU receives the target software package sent by the OTA server.

Optionally, with reference to the third aspect, in a first possible implementation, the UCM Master module is further configured to invoke a third interface of the OTA server when obtaining a first parameter value, so that the OTA server sends the target software package to the node ECU in response to a fact that the third interface is invoked. The first parameter value is a parameter value included in a first invocation result returned by the node ECU to the master ECU, and the first parameter value is used to indicate that the remaining storage space of the node ECU is not less than the size of the target software package.

Optionally, with reference to the first possible implementation of the third aspect, in a second possible implementation, a quantity of node ECUs is N, and N is an integer greater than 1. The UCM Master module is specifically configured to invoke the third interface of the OTA server when obtaining N first parameter values.

Optionally, with reference to the third aspect, in a third possible implementation, the UCM Master module is further configured to obtain a download address of the target software package in response to a fact that the OTA server invokes the first interface. The UCM Master module is further configured to invoke a fourth interface of the node ECU when obtaining a first parameter value, so that the node ECU obtains the download address and invokes a fifth interface of the OTA server in response to a fact that the fourth interface is invoked, and then the OTA server receives the download address and sends the target software package to the node ECU according to the download address in response to a fact that the fifth interface is invoked. The first parameter value is a parameter value included in a first invocation result returned by the node ECU to the master ECU, and the first parameter value is used to indicate that the remaining storage space of the node ECU is not less than the size of the target software package.

Optionally, with reference to the third possible implementation of the third aspect, in a fourth possible implementation, a quantity of node ECUs is N, and N is an integer greater than 1. The UCM Master module is specifically configured to invoke fourth interfaces of the node ECUs when obtaining N first parameter values.

According to a fourth aspect, this application provides a node electronic control unit ECU. The node ECU includes an update and configuration management UCM module. The UCM module is configured to: in response to a fact that a master ECU invokes a second interface of the UCM module after a first interface of the master ECU is invoked, obtain a size of a target software package and check remaining storage space of the node ECU, and when the remaining storage space is not less than the size of the target software package, receive the target software package sent by an OTA server. The first interface of the master ECU is invoked by the OTA server, so that the master ECU obtains the size of the target software package in response to a fact that the first interface is invoked.

Optionally, with reference to the fourth aspect, in a first possible implementation, the UCM module is further configured to return a first invocation result to the master ECU. The first invocation result includes a first parameter value, and the first parameter value is used to indicate that the remaining storage space of the node ECU is not less than the size of the target software package, so that the master ECU invokes a third interface of the OTA server when obtaining the first parameter value, and then the OTA server sends the target software package to the node ECU in response to a fact that the master ECU invokes the third interface.

Optionally, with reference to the fourth aspect, in a second possible implementation, the UCM module is further configured to return a first invocation result to the master ECU. The first invocation result includes a first parameter value, and the first parameter value is used to indicate that the remaining storage space of the node ECU is not less than the size of the target software package, so that the master ECU invokes a fourth interface of the node ECU when obtaining the first parameter value. The UCM module is further configured to: in response to a fact that the master ECU invokes the fourth interface, obtain a download address of the target software package and invoke a fifth interface of the OTA server, so that the OTA server receives the download address and sends the target software package to the node ECU according to the download address in response to a fact that the fifth interface is invoked.

According to a fifth aspect, this application provides a data transmission method, including: An OTA server invokes a first interface of a master ECU, so that the master ECU obtains a size of a target software package in response to a fact that the OTA server invokes the first interface, and the master ECU invokes a second interface of a node ECU, so that the node ECU obtains the size of the target software package and checks remaining storage space of the node ECU in response to a fact that the master ECU invokes the second interface, and when the remaining storage space is not less than the size of the target software package, the node ECU receives the target software package sent by the OTA server.

Optionally, with reference to the fifth aspect, in a first possible implementation, the method further includes: The OTA server sends the target software package to the node ECU in response to a fact that the master ECU invokes a third interface of the UCM module. The third interface is an interface that is of the OTA server and that is invoked by the master ECU when the master ECU obtains a first parameter value, the first parameter value is a parameter value included in a first invocation result returned by the node ECU to the master ECU, and the first parameter value is used to indicate that the remaining storage space of the node ECU is not less than the size of the target software package.

Optionally, with reference to the fifth aspect, in a second possible implementation, the method further includes: The OTA server invokes the first interface of the master ECU, so that the master ECU obtains a download address of the target software package in response to a fact that the OTA server invokes the first interface, and then the node ECU obtains the download address of the target software package and invokes a fifth interface of the OTA server in response to a fact that the master ECU invokes a fourth interface. In response to a fact that the node ECU invokes the fifth interface of the UCM module, the OTA server receives the download address of the target software package and sends the target software package to the node ECU according to the download address.

According to a sixth aspect, this application provides a data transmission method, including: A master ECU obtains a size of a target software package in response to a fact that an OTA server invokes a first interface of a UCM Master module. The master ECU invokes a second interface of a node ECU, so that the node ECU obtains the size of the target software package and checks remaining storage space of the node ECU in response to a fact that the second interface is invoked, and when the remaining storage space is not less than the size of the target software package, the node ECU receives the target software package sent by the OTA server.

Optionally, with reference to the sixth aspect, in a first possible implementation, the method further includes: The master ECU invokes a third interface of the OTA server when obtaining a first parameter value, so that the OTA server sends the target software package to the node ECU in response to a fact that the third interface is invoked. The first parameter value is a parameter value included in a first invocation result returned by the node ECU to the master ECU, and the first parameter value is used to indicate that the remaining storage space of the node ECU is not less than the size of the target software package.

Optionally, with reference to the first possible implementation of the sixth aspect, in a second possible implementation, a quantity of node ECUs is N, and N is an integer greater than 1. That the master ECU invokes a third interface of the OTA server when obtaining a first parameter value includes: The master ECU invokes the third interface of the OTA server when obtaining N first parameter values.

Optionally, with reference to the sixth aspect, in a third possible implementation, the method further includes: The master ECU obtains a download address of the target software package in response to a fact that the OTA server invokes the first interface. The master ECU invokes a fourth interface of the node ECU when obtaining a first parameter value, so that the node ECU obtains the download address and invokes a fifth interface of the OTA server in response to a fact that the fourth interface is invoked, and then the OTA server receives the download address and sends the target software package to the node ECU according to the download address in response to a fact that the fifth interface is invoked. The first parameter value is a parameter value included in a first invocation result returned by the node ECU to the master ECU, and the first parameter value is used to indicate that the remaining storage space of the node ECU is not less than the size of the target software package.

Optionally, with reference to the third possible implementation of the sixth aspect, in a fourth possible implementation, a quantity of node ECUs is N, and N is an integer greater than 1. That the master ECU invokes a fourth interface of the node ECU when obtaining a first parameter value includes: The master ECU invokes fourth interfaces of the node ECUs when obtaining N first parameter values.

According to a seventh aspect, this application provides a data transmission method, including: In response to a fact that a master ECU invokes a second interface of a UCM module after a first interface of the master ECU is invoked, a node ECU obtains a size of a target software package and checks remaining storage space of the node ECU; and when the remaining storage space is not less than the size of the target software package, the node ECU receives the target software package sent by an OTA server. The first interface of the master ECU is invoked by the OTA server, so that the master ECU obtains the size of the target software package in response to a fact that the first interface is invoked.

Optionally, with reference to the seventh aspect, in a first possible implementation, the method further includes: The node ECU returns a first invocation result to the master ECU. The first invocation result includes a first parameter value, and the first parameter value is used to indicate that the remaining storage space of the node ECU is not less than the size of the target software package, so that the master ECU invokes a third interface of the OTA server when obtaining the first parameter value, and then the OTA server sends the target software package to the node ECU in response to a fact that the master ECU invokes the third interface.

Optionally, with reference to the seventh aspect, in a second possible implementation, the method further includes: The node ECU returns a first invocation result to the master ECU. The first invocation result includes a first parameter value, and the first parameter value is used to indicate that the remaining storage space of the node ECU is not less than the size of the target software package, so that the master ECU invokes a fourth interface of the node ECU when obtaining the first parameter value. In response to a fact that the master ECU invokes the fourth interface, the node ECU obtains a download address of the target software package and invokes a fifth interface of the OTA server, so that the OTA server receives the download address and sends the target software package to the node ECU according to the download address in response to a fact that the fifth interface is invoked.

According to an eighth aspect, this application provides an OTA server. The OTA server may include a processor, the processor is coupled to a memory, the memory stores a program instruction, and when the program instruction stored in the memory is executed by the processor, the method according to any one of the fifth aspect and the possible implementations of the fifth aspect is implemented.

According to a ninth aspect, this application provides an ECU. The ECU may include a processor, the processor is coupled to a memory, the memory stores a program instruction, and when the program instruction stored in the memory is executed by the processor, the method according to any one of the sixth aspect and the possible implementations of the sixth aspect is implemented.

According to a tenth aspect, this application provides an ECU. The ECU may include a processor, the processor is coupled to a memory, the memory stores a program instruction, and when the program instruction stored in the memory is executed by the processor, the method according to any one of the seventh aspect and the possible implementations of the seventh aspect is implemented.

According to an eleventh aspect, this application provides a computer-readable storage medium. The computer-readable storage medium may include a program. When the program is run on a computer, the computer is enabled to perform the method according to any one of the fifth aspect and the possible implementations of the fifth aspect.

According to a twelfth aspect, this application provides a computer-readable storage medium. The computer-readable storage medium may include a program. When the program is run on a computer, the computer is enabled to perform the method according to any one of the sixth aspect and the possible implementations of the sixth aspect.

According to a thirteenth aspect, this application provides a computer-readable storage medium. The computer-readable storage medium may include a program. When the program is run on a computer, the computer is enabled to perform the method according to any one of the seventh aspect and the possible implementations of the seventh aspect.

According to a fourteenth aspect, this application provides a chip system. The chip system may include a processor configured to support a vehicle to implement the functions in the method according to any one of the sixth aspect and the possible implementations of the sixth aspect.

According to a fifteenth aspect, this application provides a chip system. The chip system may include a processor configured to support a vehicle to implement the functions in the method according to any one of the seventh aspect and the possible implementations of the seventh aspect.

According to a sixteenth aspect, this application provides a computer program product. When the computer program product is run on a device, the device is enabled to perform the method according to any one of the fifth aspect and the possible implementations of the fifth aspect.

According to a seventeenth aspect, this application provides a computer program product. When the computer program product is run on a device, the device is enabled to perform the method according to any one of the sixth aspect and the possible implementations of the sixth aspect.

According to an eighteenth aspect, this application provides a computer program product. When the computer program product is run on a device, the device is enabled to perform the method according to any one of the seventh aspect and the possible implementations of the seventh aspect.

According to a nineteenth aspect, this application provides an intelligent vehicle. The intelligent vehicle may include a master ECU and a node ECU, the master ECU is the ECU according to any one of the third aspect and the possible implementations of the third aspect, and the node ECU is the ECU according to any one of the fourth aspect and the possible implementations of the fourth aspect.

According to a twentieth aspect, this application provides an intelligent vehicle. The intelligent vehicle includes a processing circuit and a storage circuit, and the processing circuit and the storage circuit are configured to perform the method according to any one of the sixth aspect and the possible implementations of the sixth aspect.

According to a twenty-first aspect, this application provides an intelligent vehicle. The intelligent vehicle includes a processing circuit and a storage circuit, and the processing circuit and the storage circuit are configured to perform the method according to any one of the seventh aspect and the possible implementations of the seventh aspect.

This application provides a data transmission system, a data transmission method, an intelligent vehicle, and an apparatus. According to the solutions provided in this application, the master ECU still controls an upgrade process of each node ECU. However, a software package of each node ECU is directly sent to each node ECU by the OTA server, and the master ECU does not need to buffer the software package of each node ECU and does not need to forward an upgrade package of each node ECU. In this manner, the master ECU does not need to have relatively large storage space or relatively high processing performance, and upgrade efficiency can be further improved. In addition, in the data transmission system provided in this application, a new interface is defined. When all node ECUs have sufficient storage space to store respective software packages, the respective software packages are sent to the node ECUs. This prevents an upgrade failure caused by insufficiency of resources of some node ECUs in a download process, and reduces user traffic consumption and resource waste caused by the upgrade failure. The upgrade efficiency can be further improved.

### BRIEF DESCRIPTION OF DRAWINGS

FIG. 1 is a schematic diagram of an AutoSar;
FIG. 2 is a schematic diagram of an architecture for implementing software upgrade in an AutoSar;
FIG. 3 is a schematic diagram of a software upgrade procedure in an AutoSar;
FIG. 4 is a schematic flowchart of a data transmission method according to an embodiment of this application;
FIG. 5 is a schematic flowchart of another data transmission method according to an embodiment of this application;
FIG. 6 is a schematic flowchart of another data transmission method according to an embodiment of this application;
FIG. 7a is a schematic flowchart of another data transmission method according to an embodiment of this application;
FIG. 7b is a schematic flowchart of another data transmission method according to an embodiment of this application;
FIG. 8 is a schematic diagram of a structure of a data transmission system according to an embodiment of this application;
FIG. 9 is a schematic diagram of a structure of a communications device according to an embodiment of this application;
FIG. 10 is a schematic diagram of a structure of a vehicle according to an embodiment of this application; and
FIG. 11 is a schematic diagram of an application scenario according to an embodiment of this application.

### DESCRIPTION OF EMBODIMENTS

The following describes the embodiments of this application with reference to the accompanying drawings. It is clear that the described embodiments are merely a part rather than all of the embodiments of this application. A person of ordinary skill in the art may learn that, with development of technologies and emergence of new scenarios, the technical solutions provided in the embodiments of this application are also applicable to similar technical problems.

In the specification, the claims, and the accompanying drawings of this application, the terms "first", "second", and so on are intended to distinguish between similar objects but do not necessarily indicate a specific order or sequence. It should be understood that data used in such a way are interchangeable in proper cases, so that the embodiments described herein can be implemented in other orders than the order illustrated or described herein. Moreover, the terms "including", "having", and any other variants thereof are intended to cover a non-exclusive inclusion, for example, a process, method, system, product, or device that includes a series of steps or modules is not necessarily limited to those steps or modules that are clearly listed, but may include other steps or modules that are not clearly listed or that are inherent to such a process, method, product, or device. Naming or numbering of steps in this application does not mean that steps in a method procedure need to be performed according to a time/logical sequence indicated by the naming or the numbering. An execution sequence of steps in a procedure that have been named or numbered may be changed according to a technical obj ective to be achieved, provided that a same or similar technical effect can be achieved. Division into modules in this application is logical division. There may be another division manner during actual application. For example, a plurality of modules may be combined or integrated into another system, or some features may be ignored or not performed. In addition, the displayed or discussed mutual couplings or direct couplings or communication connections may be implemented by using some interfaces. Indirect couplings or communication connections between the modules may be implemented in an electronic or another similar form. This is not limited in this application. In addition, the modules or submodules described as separate parts may or may not be physically separate, may or may not be physical modules, or may be distributed on a plurality of circuit modules. Some or all of the modules may be selected based on an actual requirement to implement the objectives of the solutions of this application.

An AutoSar is an open and standardized software architecture jointly established by global automobile manufacturers, component suppliers, and electronic software system companies. It is a summary of the experience in automotive technologies developed for more than 100 years. The AutoSar defines a series of system service interfaces. These interfaces can be used to implement compatibility and interoperability of different software, thereby simplifying automotive software development and facilitating software deployment on vehicles of different models. The AutoSar mainly has the following features:
a. The AutoSar is dedicated to resolving software development difficulties caused by a difference between hardware platforms, so that developers can focus on innovation in automotive software functions.
b. The AutoSar provides standard software interface definitions. An engineer can allocate a required software component to an electronic control unit (electronic control unit, ECU) of a vehicle based on an actual requirement, to implement reusability of a standard software component.
c. An application-layer software component of the AutoSar is independent of the hardware, and therefore, an application developer can specify details of each vehicle function in application software without worrying about a problem of incompatibility between a bottom-layer software service and a hardware interface.

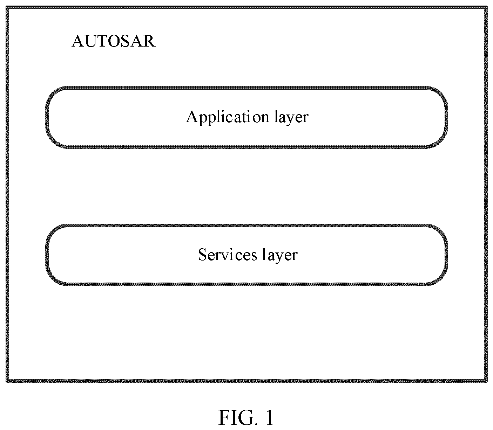

FIG. 1 is a schematic diagram of an AutoSar. Usually, it may be considered that an AutoSar includes an application layer (application layer) and a services layer (services layer).

The application layer encapsulates some or all of functions and behavior of automotive electronics, including implementation and corresponding descriptions of specific module functions, and opens only defined interfaces to the outside.

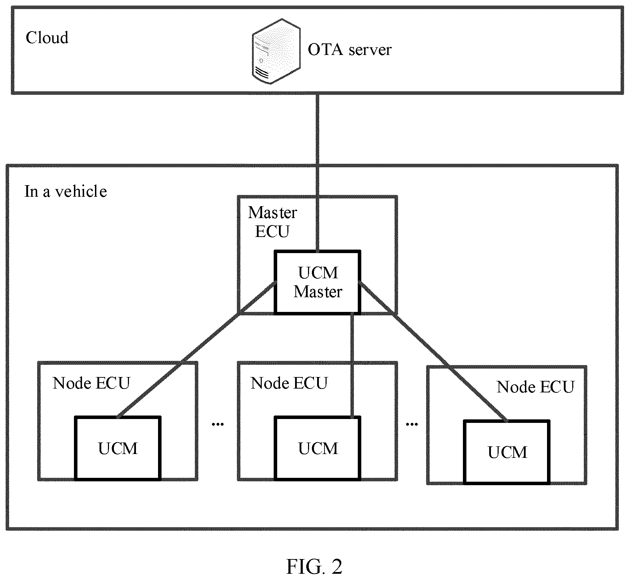

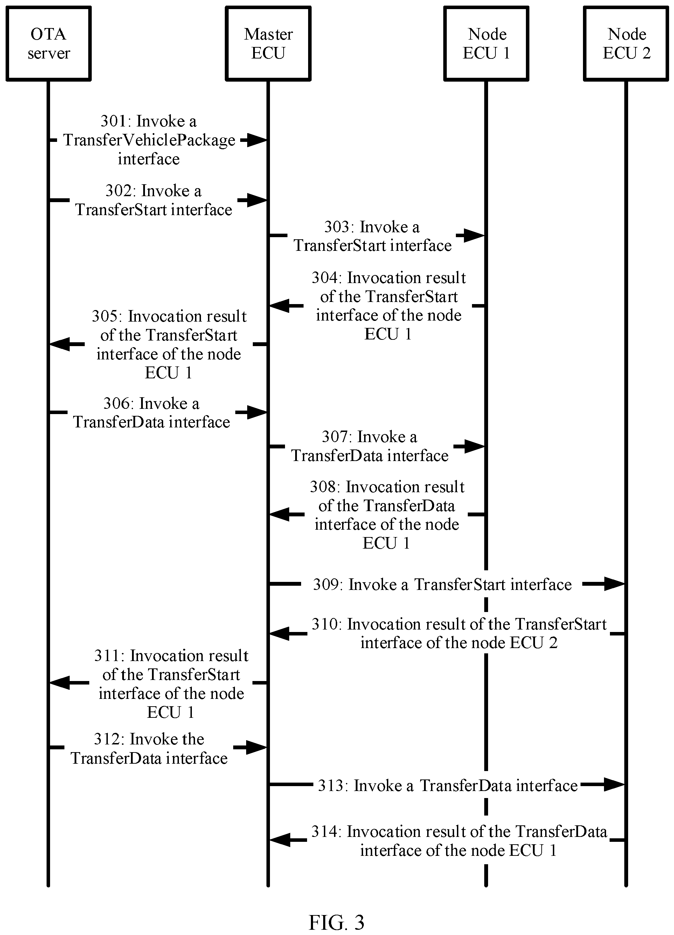

Main services of the services layer include a communication management service (communication management, COM), a cryptography service (cryptography, CRYPTO), a log service (logging & tracing, LOG), a diagnostic service (diagnostics service, DIAG), a persistent storage service (persistency, PER), a state management service (state management, SM), an execution management service (execution management, EXEC), a time synchronization service (time synchronization, TSYNC), an update and configuration management service (update and configuration management, UCM), an update and configuration management master service (update and configuration management master, UCM Master), and the like. The solutions provided in this application mainly relate to the UCM and the UCM Master at the services layer. The embodiments provided in this application mainly focus on the UCM and the UCM Master at the services layer in the AutoSar. The UCM and the UCM Master are responsible for managing update and upgrade of vehicle software in a vehicle. The existing standards define interfaces and interaction procedures between UCM and UCM Master services. Automobile users or manufacturers can easily install, update, and uninstall software in an AutoSar system by using these interfaces. With reference to FIG. 2 and FIG. 3, the following describes a process of upgrading automotive software in a vehicle by using the UCM in the AutoSar.

FIG. 2 is a schematic diagram of an architecture for implementing software upgrade in an AutoSar. In the AutoSar, upgrade of software in a vehicle can be implemented by using an OTA technology. The OTA means that automobile software is updated or upgraded by using an air communications interface, for example, wireless fidelity (wireless fidelity, Wi-Fi), long term evolution (long term evolution, LTE), or 5th generation mobile communications (5th generation, 5G). Because OTA upgrade does not rely on fixed places or fixed lines, the OTA upgrade has flexibility and convenience that conventional automotive software upgrade methods do not have. A software upgrade package can be downloaded from a cloud server to the local by using the OTA technology. In this application, the cloud server is alternatively sometimes referred to as an OTA server, an OTA cloud, or an OTA cloud server, and these terms indicate a same meaning. The local in this application refers to an ECU in a vehicle. The vehicle includes a plurality of ECUs, software of the plurality of ECUs has an upgrade requirement, and an upgrade sequence of the plurality of ECUs may have a dependency relationship, that is, a software upgrade sequence of the plurality of ECUs needs to be controlled. In addition, an upgrade condition may be further limited, for example, whether software can be upgraded in a driving state, or whether the software can be upgraded only after consent of a user is obtained. Therefore, a control module needs to be installed on at least one of the plurality of ECUs, to coordinate software upgrade of the plurality of ECUs. In an AutoSar, this module is a UCM master (UCM Master) module. Usually, the UCM Master module may be installed on a gateway or a telematics box (telematics box, TBOX). In addition, UCM modules are installed on the other ECUs in the vehicle, so that the ECU on which the UCM Master module is installed controls and coordinates UCM modules on other ECUs that need to be upgraded, to complete entire vehicle software upgrade. The following describes an interaction process of software upgrade and download in the AutoSar with reference to FIG. 3. Hereinafter, the ECU on which the UCM Master module is installed is referred to as a master ECU, and the ECU on which the UCM module is installed is referred to as a node ECU.

FIG. 3 is a schematic diagram of a software upgrade procedure in an AutoSar. As shown in FIG. 3, a transmission system includes an OTA server, a master ECU, and a plurality of node ECUs. For example, FIG. 3 shows two node ECUs: a node ECU 1 and a node ECU 2. The master ECU is an ECU on which a UCM Master module is installed in the ECUs in a vehicle, and the node ECU is an ECU on which a UCM module is installed in the ECUs in the vehicle. The software upgrade procedure in the AutoSar may include the following steps.

301: The OTA server invokes a TransferVehiclePackage interface of the master ECU.

The OTA server invokes the TransferVehiclePackage interface of the UCM Master module of the master ECU. It should be noted that the UCM Master module is alternatively sometimes referred to as a UCM Master service in this application. In addition, it should be noted that an interface of a master ECU in this application is an interface of a UCM Master module of the master ECU. Details are not described below again.

An entire vehicle upgrade package mainly includes control information such as an upgrade policy, and the master ECU may control an upgrade and update process of each node ECU based on the information. For example, the master ECU may control an upgrade sequence and an upgrade condition of each node ECU based on the control information. The upgrade condition may include: whether software is allowed to be upgraded in a driving state, whether the software can be upgraded only after consent of a user is obtained, and the like.

The AutoSar defines the entire vehicle upgrade package download (TransferVehiclePackage) interface of the UCM Master module. The OTA server may invoke the TransferVehiclePackage interface of the master ECU to send the control information such as the upgrade policy to the master ECU. Specifically, the control information such as the upgrade policy is sent to the UCM Master module.

The entire vehicle upgrade package further includes information about a software package of each ECU. For example, the information about the software package may include information about a package name and size.

302: The OTA server invokes a TransferStart interface of the master ECU.

The OTA server invokes the TransferStart interface of the UCM Master service of the master ECU.

In this application, the software package is alternatively sometimes referred to as a software upgrade package or an upgrade package, and these terms indicate a same meaning, indicating software code or data of an ECU that needs to be updated. The AutoSar defines the transfer start (TransferStart) interface of the UCM Master service. The OTA server may invoke the TransferStart interface of the UCM Master service of the master ECU to send a name of a software upgrade package of each node ECU to the master ECU.

303: The master ECU invokes a TransferStart interface of the node ECU 1.

The master ECU invokes the TransferStart interface of a UCM module of the node ECU 1. It should be noted that an interface of a node ECU in this application refers to an interface of a UCM module of the node ECU. Details are not described below again.

For example, the node ECU includes the node ECU 1.

The master ECU invokes the TransferStart interface of the node ECU 1, and a parameter value of the TransferStart interface of the node ECU 1 is a size of a software upgrade package of the node ECU 1. The ECU 1 detects remaining storage space in response to a fact that the TransferStart interface is invoked, and determines whether the remaining storage space is sufficient to store an upgrade package of the ECU 1.

304: The node ECU 1 returns an invocation result of the TransferStart interface of the node ECU 1.

The UCM module of the node ECU 1 returns the invocation result of the TransferStart interface to the master ECU in response to a fact that the master ECU invokes the TransferStart interface. The invocation result may indicate whether the node ECU 1 has sufficient remaining storage space to store the upgrade package of the node ECU 1.

305: The master ECU feeds back the obtained invocation result of the TransferStart interface of the node ECU 1 to the OTA server.

306: The OTA server invokes a TransferData interface of the master ECU.

The OTA server invokes the TransferData interface of the UCM Master module of the master ECU.

If the OTA server can determine, according to step 305, that the node ECU 1 has sufficient storage space, the OTA server sends the upgrade package of the ECU 1 to the master ECU. The upgrade package of the ECU 1 may include software code or data of the ECU 1 that needs to be updated.

The AutoSar defines the data transfer (TransferData) interface of the UCM Master module and a data transfer (TransferData) interface of a UCM service. The OTA server invokes the TransferData interface of the UCM Master service of the master ECU. A parameter value of the TransferData interface is a software package of the ECU 1. In this way, the software package of the node ECU 1 is sent to the master ECU.

307: The master ECU invokes a TransferData interface of the node ECU 1.

The master ECU invokes the TransferData interface of the UCM module of the node ECU 1. A parameter value of the TransferData interface is the software package of the ECU 1. In this way, the software package of the node ECU 1 is sent to the node ECU 1.

308: The node ECU 1 returns an invocation result of the TransferData interface of the node ECU 1.

In response to a fact that the master ECU invokes the TransferData interface of the node ECU 1, the UCM module of the node ECU 1 may return the invocation result for notifying the master ECU that receiving succeeds or fails.

309: The master ECU invokes a TransferStart interface of the node ECU 2.

The master ECU invokes the TransferStart interface of a UCM module of the node ECU 2, and a parameter value of the TransferStart interface of the node ECU 2 is a size of a software upgrade package of the node ECU 2. The ECU 2 detects remaining storage space in response to a fact that the TransferStart interface is invoked, and determines whether the remaining storage space is sufficient to store an upgrade package of the ECU 2.

310: The node ECU 2 returns an invocation result of the TransferStart interface of the node ECU 2.

The UCM module of the node ECU 2 returns the invocation result of the TransferStart interface to the master ECU in response to a fact that the master ECU invokes the TransferStart interface. The invocation result may indicate whether the node ECU 2 has sufficient remaining storage space to store the upgrade package of the node ECU 2.

311: The master ECU feeds back the obtained invocation result of the TransferStart interface of the node ECU 2 to the OTA server.

312: The OTA server invokes the TransferData interface of the master ECU.

If the OTA server can determine, according to step 309, that the node ECU 2 has sufficient storage space, the OTA server sends the upgrade package of the ECU 2 to the master ECU. The upgrade package of the ECU 2 includes software code or data of the ECU 2 that needs to be updated.

The OTA server invokes the TransferData interface of the master ECU to send the upgrade package of the node ECU 2 to the master ECU.

313: The master ECU invokes a TransferData interface of the node ECU 2.

For example, the node ECU also includes the node ECU 2.

The master ECU invokes the TransferData interface of the node ECU 2. A parameter value of the TransferData interface is a software package of the ECU 2. In this way, the software package of the node ECU 2 is sent to the node ECU 2.

In a possible implementation, step 314 may be further included: The node ECU 2 returns an invocation result of the TransferData interface of the node ECU 2.

In response to a fact that the master ECU invokes the TransferData interface of the node ECU 2, the node ECU 2 may return the invocation result for notifying the master ECU that receiving succeeds or fails.

If downloading of another upgrade package is further included, for example, another node ECU is further included, a process of downloading an upgrade package is the same as processes of downloading the upgrade packages of the node ECU 1 and the node ECU 2. For understanding, refer to step 303 to step 308, or refer to step 309 to step 314. Step 303 to step 314 are intended to express that the master ECU sends the size of the software upgrade package to each node ECU to enable the node ECU to check whether there is sufficient available memory.

The applicant finds that the software upgrade procedure in the AutoSar has a disadvantage. In the upgrade package transmission procedure, the master ECU needs to buffer software packages of all the node ECUs, and then forward the software packages of the node ECUs to the corresponding node ECUs, for example, step 306 and step 307, and step 312 and step 313 need to be performed. This design is to enable the master ECU to control upgrade of each node ECU based on the control information and coordinate upgrade processes of the plurality of node ECUs. For example, controlling an upgrade sequence of each node ECU includes controlling sequences of downloading, installing, and activating an upgrade package of each node ECU. However, this design has relatively high requirements on storage space and processing performance of the master ECU. If the storage space of the master ECU is insufficient, downloading of the upgrade package may fail. If the processing performance of the master ECU is not high, downloading efficiency is affected, that is, a transmission speed of the upgrade package is relatively low. This affects entire vehicle upgrade efficiency. In addition, the applicant finds that, in the foregoing design, when some node ECUs do not have sufficient storage space, node ECUs that have sufficient storage space still need to download respective software packages. In this case, if there is a dependency relationship between the node ECUs that do not have sufficient storage space and the node ECUs that have sufficient storage space in an upgrade sequence, upgrade of the nodes that have sufficient storage space may fail even if the upgrade packages are downloaded. Consequently, storage resources are wasted, and upgrade efficiency is affected. For example, the node ECU 1 has sufficient storage space and downloads the software package of the node ECU 1 from the master ECU. The node ECU 2 does not have sufficient storage space, and the master ECU does not send the software package of the node ECU 2 to the node ECU 2. If the node ECU 1 and the node ECU 2 have a dependency relationship in upgrade, upgrade of the node ECU 1 may fail even if the node ECU 1 downloads the software package of the node ECU 1. Consequently, the storage space of the node ECU 1 is wasted, and upgrade efficiency is also affected. It should be noted that, in addition to the dependency relationship between the node ECUs in the upgrade sequence, an upgrade failure may also occur because some node ECUs do not have sufficient storage space.

To resolve the foregoing problem, this application provides a data transmission system. A master ECU still controls an upgrade process of each node ECU. For example, the master ECU may learn of an upgrade status of each node ECU. Specifically, in this application, the master ECU may still learn of a download status of the node ECU, for example, control a given node ECU to download a software package, control a given node ECU not to download a software package, or control a sequence in which a plurality of node ECUs download respective software packages. In other words, the master ECU may control the plurality of node ECUs to simultaneously download the software packages or download the software packages in a specific download sequence. Alternatively, the master ECU may control whether the node ECU downloads the software package. On this basis, namely, on the basis that the master ECU still controls the upgrade process of each node ECU, the software package of each node ECU is directly sent to each node ECU by an OTA server, and the master ECU does not need to buffer the software package of each node ECU and does not need to forward the upgrade package of each node ECU. In this manner, the master ECU does not need to have relatively large storage space or relatively high processing performance, and upgrade efficiency can also be improved. In addition, in the data transmission system provided in this application, a new interface is defined. When all node ECUs have sufficient storage space to store respective software packages, the respective software packages are sent to the node ECUs. This can further improve the upgrade efficiency.

It should be noted that the data transmission system provided in this embodiment of this application may be based on an AutoSar, or may be based on another data transmission system for upgrading an ECU in a vehicle. This application is described based on the AutoSar used as an example.

Based on the foregoing research idea, the following specifically describes the technical solutions provided in this application.

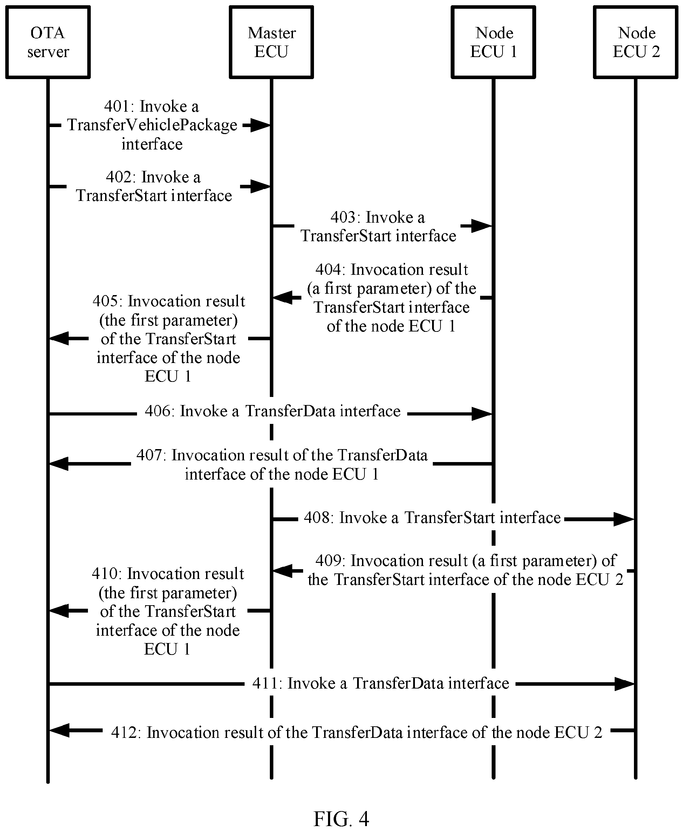

FIG. 4 is a schematic flowchart of a data transmission method according to an embodiment of this application.

The data transmission method provided in this embodiment of this application may include the following steps.

401: An OTA server invokes a TransferVehiclePackage interface of a master ECU.

For understanding of step 401, refer to step 301 in the solution corresponding to FIG. 3. Details are not described herein again.

402: The OTA server invokes a TransferStart interface of the master ECU.

For understanding of step 402, refer to step 302 in the solution corresponding to FIG. 3. Details are not described herein again.

403: The master ECU invokes a TransferStart interface of a node ECU 1.

For understanding of step 403, refer to step 303 in the solution corresponding to FIG. 3. Details are not described herein again.

404: The node ECU 1 returns an invocation result of the TransferStart interface of the node ECU 1.

The node ECU 1 returns the invocation result of the TransferStart interface to the master ECU in response to a fact that the master ECU invokes the TransferStart interface. The invocation result may indicate whether the node ECU 1 has sufficient remaining storage space to store an upgrade package of the node ECU 1.

In addition, in the solution provided in this application, the invocation result may further include a first parameter. A first parameter value is used to indicate the OTA server to directly send a software package of the node ECU 1 to the node ECU 1. The following provides description with reference to several specific implementations.

In a possible implementation, if the node ECU 1 has sufficient remaining storage space to store the upgrade package of the node ECU 1, the invocation result further includes the first parameter value. The master ECU may feed back the first parameter value to the OTA server. After obtaining the first parameter value, the OTA server may directly send the software package to the node ECU 1, without using the master ECU.

In a possible implementation, the first parameter is added to the invocation result. If the node ECU 1 has sufficient remaining storage space to store the upgrade package of the node ECU 1, a value of the first parameter is A; or if the node ECU 1 does not have sufficient remaining storage space to store the upgrade package of the node ECU 1, a value of the first parameter is B. Herein, A and B are examples for describing different values of the first parameter in two cases: a case in which the node ECU 1 determines that there is sufficient remaining storage space and a case in which the node ECU 1 determines that there is no sufficient remaining storage space. The node ECU 1 may feed back the first parameter to enable the OTA server to learn whether the software package can be directly sent to the node ECU 1. For example, if the OTA server learns that the value of the first parameter is A, the OTA server can directly send the software package to the node ECU 1, without using the master ECU.

405: The master ECU feeds back the obtained invocation result of the TransferStart interface of the node ECU 1 to the OTA server.

A UCM master module of the master ECU feeds back the obtained invocation result of the TransferStart interface of the node ECU 1 to a UCM module of the OTA server.

In this solution, if the node ECU 1 has sufficient remaining storage space to store the upgrade package of the node ECU 1, the invocation result fed back to the OTA server includes the first parameter.

In a possible implementation, the master ECU may invoke an interface of the OTA server, to send the obtained invocation result of the TransferStart interface of the node ECU 1 to the OTA server, so that the OTA server sends the software package to the node ECU in response to a fact that the interface is invoked. It should be noted that, in this application, that a device sends information to another device or indicates another device to execute an action is usually described as that a device invokes an interface of another device, that is, a device invokes an interface of another device to send information to the another device or indicate the another device to execute an action. Details are not described again in the embodiments of this application.

406: The OTA server invokes a TransferData interface of the node ECU 1.

If the node ECU 1 has sufficient remaining storage space to store the upgrade package of the node ECU 1, the OTA server may directly send the software package of the node ECU 1 to the node ECU 1, and the software package does not need to be forwarded by the master ECU. Specifically, the OTA server learns, based on the first parameter, whether the software package of the node ECU 1 can be directly sent to the node ECU 1. The first parameter is a parameter included in the invocation result of the TransferStart interface of the node ECU 1.

For example, in the AutoSar, the OTA server may invoke the TransferData interface of the node ECU 1. A parameter value of the TransferData interface is the software package of the ECU 1. In this way, the software package of the node ECU 1 is sent to the node ECU 1.

In a possible implementation, step 407 may be further included: The node ECU 1 returns an invocation result of the TransferData interface of the node ECU 1.

In response to a fact that the OTA server invokes the TransferData interface of the node ECU 1, the node ECU 1 may return the invocation result for notifying the OTA server that receiving succeeds or fails.

408: The master ECU invokes a TransferStart interface of a node ECU 2.

For example, node ECUs further include the node ECU 2, and the master ECU invokes the TransferStart interface of the node ECU 2.

409: The node ECU 2 returns an invocation result of the TransferStart interface of the node ECU 2.

410: The master ECU feeds back the obtained invocation result of the TransferStart interface of the node ECU 2 to the OTA server.

411: The OTA server invokes a TransferData interface of the node ECU 2.

A parameter value of the TransferData interface of the node ECU 2 is a software package of the node ECU 2.

In a possible implementation, step 412 may be further included: The node ECU 2 returns an invocation result of the TransferData interface of the node ECU 2.

For understanding of step 408 to step 412, refer to step 403 to step 407. Details are not described herein again. If another node ECU is further included, for understanding of a process of downloading an upgrade package, refer to the process of downloading the upgrade package of the ECU 1, that is, for understanding, refer to step 403 to step 407.

It can be learned from the embodiment corresponding to FIG. 4 that, in this solution, an existing software upgrade procedure specified by the AutoSar is slightly changed. A parameter is added to an invocation result of a TransferStart interface of a node ECU, and the parameter is fed back to the OTA server, so that the OTA server learns that distributed download can be performed, and directly sends an upgrade package of the node ECU to the corresponding node ECU without using the master ECU. In this solution, dependence on storage space and processing performance of the master ECU is reduced. In addition, according to the solution provided in this application, a plurality of node ECUs can perform downloading at the same time, which improves download efficiency.

It should be noted that, in addition to the solution provided in the embodiment corresponding to FIG. 4, this application further provides another solution in which it may be implemented based on the AutoSar that the OTA server directly sends an upgrade package to a node ECU. In addition, according to the solution provided in this application, the master ECU may learn in advance whether remaining storage space of all the node ECUs is sufficient, and only when the remaining storage space of all the node ECUs is sufficient to store respective software packages, the software packages are transmitted. This prevents an upgrade failure caused by insufficiency of resources of some node ECUs in a download process, and reduces user traffic consumption and resource waste caused by the upgrade failure. The following provides description with reference to several specific embodiments.

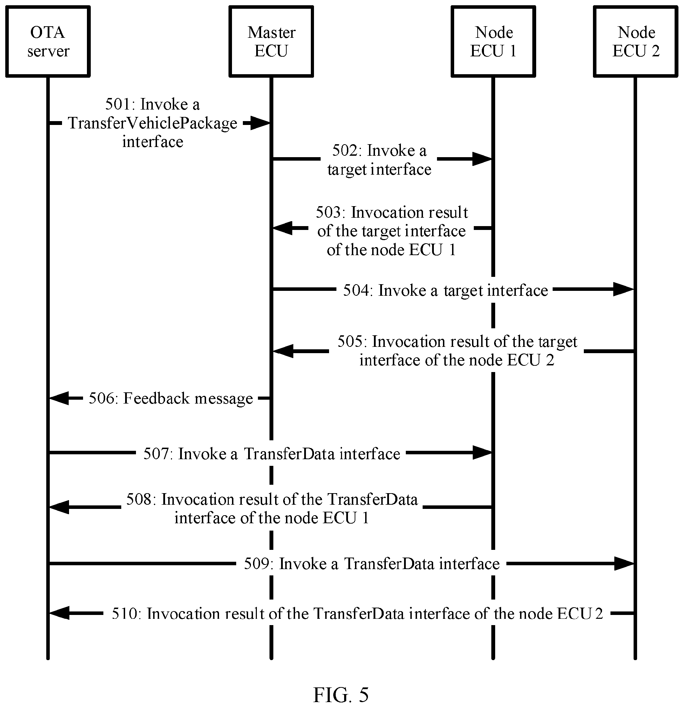

FIG. 5 is a schematic flowchart of a data transmission method according to an embodiment of this application.

501: An OTA server invokes a TransferVehiclePackage interface of a master ECU.

The OTA server invokes the TransferVehiclePackage interface of the master ECU, to send control information such as an upgrade policy, and a name and a size of a software upgrade package of each node ECU to the master ECU. For example, the OTA server invokes the TransferVehiclePackage interface of the master ECU to send a name and a size of a software package of a node ECU 1 and a name and a size of a software package of a node ECU 2 to the master ECU.

502: The master ECU invokes a target interface of the node ECU 1.

In an implementation provided in this application, a new interface is defined, so that the master ECU may centrally learn whether remaining storage space of all node ECUs is sufficient to store respective software packages.

A parameter value of the target interface may be a size of a software package of each node ECU. For example, Table 1 provides a manner of defining the target interface. It is assumed that a name of the target interface is TransferCheck, an input parameter value of the target interface is a size (size) of a software package, and a return value of the target interface is true or false, where true may represent that remaining storage space of a node ECU is sufficient to store a software package of the node ECU, and false may represent that remaining storage space of a node ECU is insufficient to store a software package of the node ECU.

**Table 1:**

| Interface name | TransferCheck |
|---|---|
| Input parameter | Size |
| Return value | True/False |

In response to a fact that the master ECU invokes target interfaces, the node ECUs check whether the storage space of the node ECUs is sufficient to store the respective software packages.

The ECU 1 is used as an example. That is, the master ECU invokes the target interface of the node ECU 1, and a parameter value of the target interface includes the size of the software package of the node ECU 1. The node ECU 1 detects remaining storage space in response to a fact that the target interface is invoked, and determines whether the remaining space is sufficient to store an upgrade package of the node ECU 1.

503: The node ECU 1 returns an invocation result of the target interface of the node ECU 1.

The node ECU 1 returns the invocation result of the target interface to the master ECU in response to a fact that the master ECU invokes the target interface. The invocation result may indicate whether the node ECU 1 has sufficient remaining storage space to store the upgrade package of the node ECU 1. For example, the returned invocation result is true or false.

504: The master ECU invokes a target interface of the node ECU 2.

For example, the node ECUs further include the node ECU 2. In this case, the master ECU invokes the target interface of the node ECU 2, and a parameter value of the target interface includes the size of the software package of the ECU 2. The ECU 2 detects remaining storage space in response to a fact that the target interface is invoked, and determines whether the remaining storage space is sufficient to store an upgrade package of the ECU 2.

505: The node ECU 2 returns an invocation result of the target interface of the node ECU 2.

The node ECU 2 returns the invocation result of the target interface to the master ECU in response to a fact that the master ECU invokes the target interface. The invocation result may indicate whether the node ECU 2 has sufficient remaining storage space to store the upgrade package of the node ECU 2. For example, the returned invocation result is true or false.

506: The master ECU sends feedback information to the OTA server based on the obtained invocation results of the target interfaces of the node ECUs.

In the foregoing step 502 to step 506, that the node ECUs include the node ECU 1 and the node ECU 2 is used for description. If another node ECU is further included, for understanding of a process of invoking a target interface, refer to step 502 to step 506.

When the master ECU determines, based on invocation results of target interfaces of all the node ECUs, that all the node ECUs have sufficient storage space to store the respective software packages, the master ECU sends the feedback message to the OTA server. The feedback information is used to indicate the OTA to perform distributed download, that is, indicate the OTA server to send the software package of each node ECU to the corresponding node ECU. For example, if the node ECUs include only the node ECU 1 and the node ECU 2, there are the following three cases:
1. When the invocation result of the target interface returned by the ECU 1 indicates that the ECU 1 has sufficient storage space to store the software package of the ECU 1, and the invocation result of the target interface returned by the ECU 2 indicates that the ECU 2 has sufficient storage space to store the software package of the ECU 2, the master ECU sends a feedback message to the OTA server.
2. When the invocation result of the target interface returned by the ECU 1 indicates that the ECU 1 has sufficient storage space to store the software package of the ECU 1, and the invocation result of the target interface returned by the ECU 2 indicates that the ECU 2 does not have sufficient storage space to store the software package of the ECU 2, the master ECU does not send a feedback message to the OTA server. In this case, the OTA server does not send the software package of the ECU 1 to the ECU 1.
3. When the invocation result of the target interface returned by the ECU 1 indicates that the ECU 1 does not have sufficient storage space to store the software package of the ECU 1, and the invocation result of the target interface returned by the ECU 2 indicates that the ECU 2 has sufficient storage space to store the software package of the ECU 2, the master ECU does not send a feedback message to the OTA server. In this case, the OTA server does not send the software package of the ECU 1 to the ECU 2.

In a possible implementation, the master ECU may send feedback information to the OTA server when sending status information. In an AutoSar, it is defined that a master ECU sends status information to an OTA server to notify the OTA server of a current upgrade status. For example, the upgrade status may include a stage of downloading an upgrade package, a stage of installing the upgrade package, a stage of activating the upgrade package, and the like. In this implementation of this embodiment of this application, new status information may be added, for example, first status information is added. If the master ECU determines, based on the invocation results of the target interfaces of all the node ECUs, that all the node ECUs have sufficient storage space to store the respective software packages, the master ECU sends the first status information when sending the status information to the OTA server. The first status information is used to notify the OTA server that distributed download can be performed. After receiving the first status information, the OTA server directly sends the software package of each node ECU to the corresponding node ECU, and the software package is not forwarded by the master ECU.

507: The OTA server invokes a TransferData interface of the node ECU 1.

If the OTA server determines, based on the feedback message, that the software packages of the node ECUs can be sent to the node ECUs, the OTA server invokes TransferData interface s of the nodes to send the software packages to the node ECUs.

The feedback message may be the status information sent by the master ECU. The status information is used to notify the OTA server that distributed download can be performed. After receiving the status information, the OTA server directly sends the software package of each node ECU to the corresponding node ECU, and the software package is not forwarded by the master ECU.

When the node ECUs include the node ECU 1, the OTA server may invoke the TransferData interface of the node ECU 1. A parameter value of the TransferData interface is the software package of the ECU 1. In this way, the software package of the node ECU 1 is sent to the node ECU 1.

In a possible implementation, step 508 may be further included: The node ECU 1 returns an invocation result of the TransferData interface of the node ECU 1.

In response to a fact that the OTA server invokes the TransferData interface of the node ECU 1, the node ECU 1 may return the invocation result for notifying the OTA server that receiving succeeds or fails.

509: The OTA server invokes a TransferData interface of the node ECU 2.

If the node ECUs further include the node ECU 2, the OTA server invokes the TransferData interface of the node ECU 2.

In a possible implementation, step 510 may be further included: The node ECU 2 returns an invocation result of the TransferData interface of the node ECU 2.

For understanding of step 509 and step 510, refer to step 507 and step 508. It should be noted that, if another node ECU is further included, refer to a process of interaction between the ECU 1 and the OTA server or between the ECU 2 and the OTA server, that is, refer to step 502 to step 509 for understanding.

It can be learned from the embodiment corresponding to FIG. 5 that a manner is provided, so that the master ECU may learn in advance whether remaining storage space of all the node ECUs is sufficient, and only when the remaining storage space of all the node ECUs is sufficient to store the respective software packages, the software packages are transmitted. This prevents an upgrade failure caused by insufficiency of resources of some node ECUs in a download process, and reduces user traffic consumption and resource waste caused by the upgrade failure. Specifically, in the implementation corresponding to FIG. 5, an interface, for example, a target interface, may be newly defined in the AutoSar, so that the master ECU may learn whether the remaining storage space of all the node ECUs is sufficient. In addition, new status information may be added, and the master ECU may notify, by using the new status information, the OTA server that distributed download can be performed, that is, the software package of each node ECU can be directly sent to the corresponding node ECU.

In the embodiment corresponding to FIG. 5, the master ECU may notify, by using the new status information, the OTA server that distributed download can be performed, that is, the software package of each node ECU can be directly sent to the corresponding node ECU. In some other implementations, the OTA server may alternatively perform distributed download in another manner, that is, directly send the software package of each node ECU to the corresponding node ECU. The following provides description with reference to a specific embodiment.

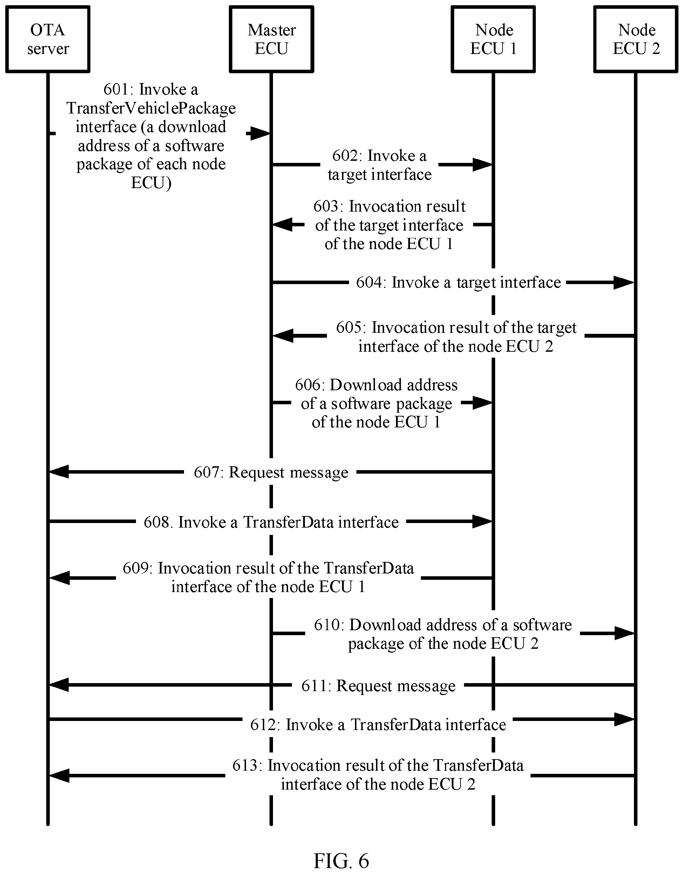

FIG. 6 is a schematic flowchart of a data transmission method according to an embodiment of this application.

601: An OTA server invokes a TransferVehiclePackage interface of a master ECU.

The OTA server invokes the TransferVehiclePackage interface of the master ECU, to send control information such as an upgrade policy, a name and a size of a software upgrade package of each node ECU, and a download address of the software package of each node ECU to the master ECU. For example, the OTA server invokes the TransferVehiclePackage interface of the master ECU to send a name and a size of a software package of a node ECU 1, a download address of the software package of the node ECU 1, a name and a size of a software package of a node ECU 2, and a download address of the software package of the node ECU 2 to the master ECU.

In a possible implementation, the download address may be in a form of a uniform resource locator (uniform resource locator, URL).

602: The master ECU invokes a target interface of the node ECU 1.

603: The node ECU 1 returns an invocation result of the target interface of the node ECU 1.

604: The master ECU invokes a target interface of the node ECU 2.

605: The node ECU 2 returns an invocation result of the target interface of the node ECU 2.

For understanding of step 602 to step 605, refer to step 502 to step 505 in the embodiment corresponding to FIG. 5. Details are not described herein again.

606: The master ECU sends the download address of the software package of the node ECU 1 to the node ECU 1.

When the master ECU determines, based on invocation results of target interfaces of all the node ECUs, that all the node ECUs have sufficient storage space to store respective software packages, the master ECU sends download addresses of the respective software packages to the node ECUs.

For example, the node ECUs include the node ECU 1 and the node ECU 2. When both the node ECU 1 and the node ECU 2 have sufficient storage space to store respective software packages, the master ECU sends the download address of the software package of the node ECU 1 to the node ECU 1, and the master ECU sends the download address of the software package of the node ECU 2 to the node ECU 2.

In a possible implementation, when learning that the node ECU 1 has sufficient storage space, the master ECU may send the download address of the software package of the node ECU 1 to the node ECU 1.

In a possible implementation, when invoking a TransferStart interface of a node ECU, the master ECU may add an input parameter to the TransferStart interface. The added input parameter is a download address of a software package of the node ECU. For example, the master ECU invokes a TransferStart interface of the node ECU 1, where the TransferStart interface includes a new parameter, and a value of the new parameter is the download address of the software package of the node ECU 1. For another example, the master ECU invokes a TransferStart interface of the node ECU 2, where the TransferStart interface includes a new parameter, and a value of the new parameter is the download address of the software package of the node ECU 2.

607: The node ECU 1 sends a request message to the OTA server based on the obtained download address of the software package of the node ECU 1.

For example, after receiving the download address of the software package of the ECU 1, the node ECU 1 sends a request message to the OTA server. The request message carries the download address of the software package of the ECU 1, and the request message is used to request the OTA server to send the software package of the node ECU 1 to the node ECU 1.

In a possible implementation, a new interface may be defined, for example, a second interface. A parameter of the second interface is a download address of a software package. When a second interface of the OTA server is invoked, the OTA server may send a software package of a node ECU to the corresponding node ECU. For example, the node ECU 1 may invoke the second interface of the OTA server. A parameter of the second interface is the download address of the software package of the node ECU 1. In response to a fact that the second interface is invoked, the OTA server may send the software package of the node ECU 1 to the node ECU 1 based on a parameter value of the second interface. It should be noted that an interface of an OTA server in this application is a UCM interface of the OTA server. Details are not described in this application again.

For example, Table 2 provides a manner of defining the second interface. It is assumed that a name of the second interface is GetTransferStart, and an input parameter of the second interface includes a download address of a software package. In some possible implementations, the input parameter of the second interface may further include a name of the software package or an identifier ID of the software package.

| Interface name | GetTransferStart |
|---|---|
| Input parameter 1 | Name of a software package |
| Input parameter 2 | Identifier ID of the software package |
| Input parameter 2 | Download address of the software package |

608: The OTA server invokes a TransferData interface of the node ECU 1.

In response to the request message sent by the node ECU 1, the OTA server sends the software package of the node ECU 1 to the node ECU 1.

For example, the OTA server may invoke the TransferData interface of the node ECU 1 to send the software package of the ECU 1 to the node ECU 1.

In a possible implementation, step 609 may be further included: The node ECU 1 returns an invocation result of the TransferData interface of the node ECU 1.

In response to a fact that the OTA server invokes the TransferData interface of the node ECU 1, the node ECU 1 may return an invocation result for notifying the OTA server that receiving succeeds or fails.

610: The master ECU sends the download address of the software package of the node ECU 2 to the node ECU 2.

When the master ECU determines, based on the invocation results of the target interfaces of all the node ECUs, that all the node ECUs have sufficient storage space to store the respective software packages, the master ECU sends the download addresses of the respective software packages to the node ECUs.

For example, the node ECUs include the node ECU 2. In this case, the master ECU sends the download address of the software package of the node ECU 2 to the node ECU 2.

611: The node ECU 2 sends a request message to the OTA server based on the obtained download address of the software package of the node ECU 2.

612: The OTA server invokes a TransferData interface of the node ECU 2.

In a possible implementation, step 613 may be further included: The node ECU 2 returns an invocation result of the TransferData interface of the node ECU 2.

For understanding of step 610 to step 613, refer to step 606 to step 609. If another node ECU is further included, refer to a process of interaction between the ECU 1 and the OTA server for understanding, that is, refer to step 602 to step 609 for understanding.

Based on an AutoSar, the solution provided in this embodiment of this application is described above. The master ECU still controls an upgrade process of each node ECU, for example, controls a sequence of downloading a software package of each node ECU. However, the software package of each node ECU is directly sent to each node ECU by the OTA server, and the master ECU does not need to buffer the software package of each node ECU and does not need to forward an upgrade package of each node ECU. In this manner, the master ECU does not need to have relatively large storage space or relatively high processing performance, and upgrade efficiency can be further improved. In addition, the solution provided in this application supports a plurality of node ECUs to perform downloading at the same time, which improves download efficiency; and it is not affected that the master ECU subsequently controls an installation process and an activation process of each node ECU. In addition, in the data transmission system provided in this application, a new interface is defined. Only when all node ECUs have sufficient storage space to store respective software packages, the respective software packages are sent to the node ECUs. This can further improve the upgrade efficiency.

Other than the foregoing manner in which the software upgrade procedure in the AutoSar is improved based on the AutoSar to resolve a problem of dependence on storage space and processing performance of the master ECU in a software upgrade process in the existing AutoSar, in the solutions provided in this application, another manner may alternatively be used to resolve the problem of dependence on the storage space and the processing performance of the ECU. The following provides description with reference to several specific implementations.

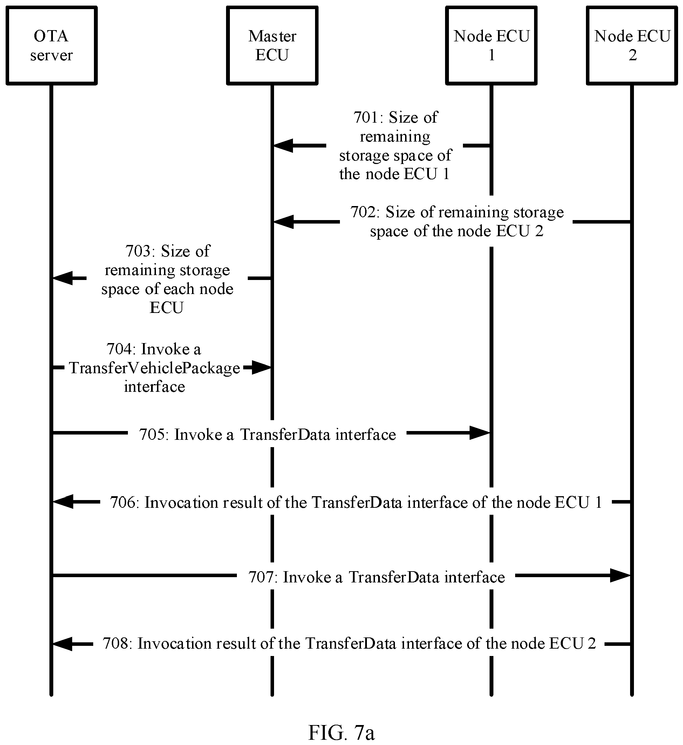

FIG. 7a is a schematic flowchart of a data transmission method according to an embodiment of this application.

701: A node ECU 1 sends a size of remaining storage space of the node ECU 1 to a master ECU.

702: A node ECU 2 sends a size of remaining storage space of the node ECU 2 to the master ECU.

703: The master ECU sends a size of remaining storage space of each node ECU to an OTA server.

**Table 3:**

| Node ID | Size of remaining storage space |
|---|---|
| ID of an ECU 1 | Size of remaining storage space of the ECU 1 |
| ID of an ECU 2 | Size of remaining storage space of the ECU 2 |

As shown in Table 3, the master ECU may send the size of the remaining storage space of each node ECU to the OTA server in a table manner.

In a possible implementation, node ECUs may alternatively directly send sizes of respective remaining storage space to the OTA server, and the sizes are not forwarded by the master ECU.

704: The OTA server invokes a TransferVehiclePackage interface of the master ECU.

If the OTA server determines, based on the size of the remaining storage space of each node ECU and a size of a software package of each node ECU, that each node ECU has sufficient storage space to store the software package of each node ECU, the OTA server invokes the TransferVehiclePackage interface of the master ECU. In an example , it is assumed that the node ECUs include only the node ECU 1 and the node ECU 2. There may be the following three cases:
1. If the remaining storage space of the node ECU 1 obtained by the OTA server is not less than a size of a software package of the ECU 1, and the obtained remaining storage space of the ECU 2 is not less than a size of a software package of the ECU 2, the OTA server invokes the TransferVehiclePackage interface of the master ECU, to send control information such as an upgrade policy to the master ECU.
2. If the remaining storage space of the node ECU 1 obtained by the OTA server is not less than a size of a software package of the node ECU 1, and the obtained remaining storage space of the node ECU 2 is less than a size of a software package of the node ECU 2, the OTA server determines that upgrade cannot succeed currently, and does not start a software package upgrading program.
3. If the remaining storage space of the node ECU 1 obtained by the OTA server is less than a size of a software package of the node ECU 1, and the obtained remaining storage space of the node ECU 2 is not less than a size of a software package of the node ECU 2, the OTA server determines that upgrade cannot succeed currently, and does not start a software package upgrading program.

705: The OTA server invokes a TransferData interface of the node ECU 1.

In a possible implementation, step 706 may be further included: The node ECU 1 returns an invocation result of the TransferData interface of the node ECU 1.

707: The OTA server invokes a TransferData interface of the node ECU 2.

In a possible implementation, step 708 may be further included: The node ECU 2 returns an invocation result of the TransferData interface of the node ECU 2.

For understanding of step 705 to step 708, refer to step 406, step 407, step 411, and step 412 in the embodiment corresponding to FIG. 4.

It should be noted that, if another node ECU is further included, for understanding, refer to the steps performed by the node ECU 1 and the node ECU 2. Details are not described herein again.

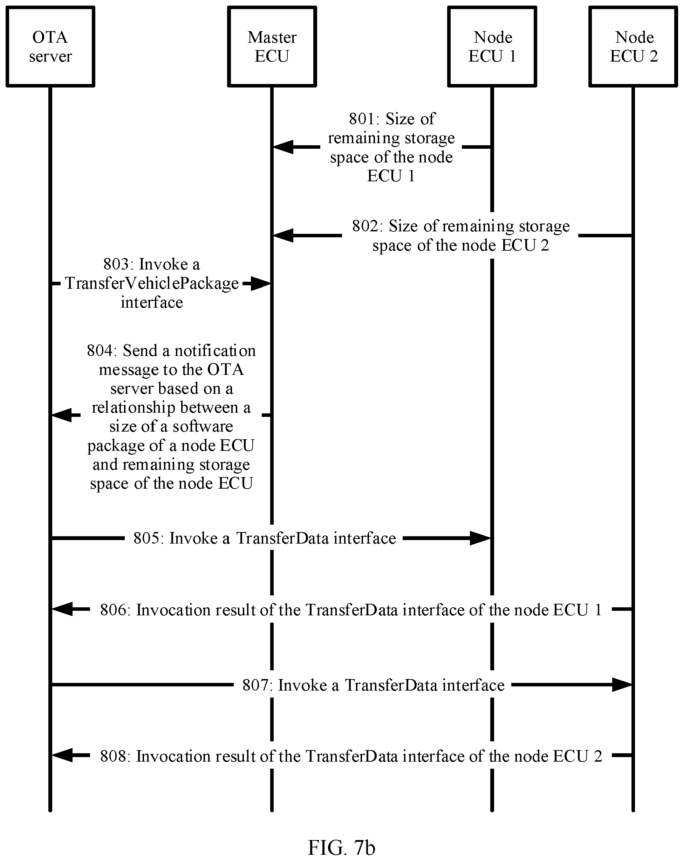

FIG. 7b is a schematic flowchart of a data transmission method according to an embodiment of this application.

801: A node ECU 1 sends a size of remaining storage space of the node ECU 1 to a master ECU.

802: A node ECU 2 sends a size of remaining storage space of the node ECU 2 to the master ECU.

803: The OTA server invokes a TransferVehiclePackage interface of the master ECU.

The OTA server invokes the TransferVehiclePackage interface of the master ECU to send sizes of software packages of all node ECUs to the master ECU. It should be noted that in this embodiment, the node ECU 1 and the node ECU 2 are used as an example for description. If another node ECU is further included, for understanding, refer to the steps performed by the node ECU 1 and the node ECU 2. Details are not described in this specification again.

804: The master ECU sends a notification message to the OTA server based on a relationship between a size of a software package of a node ECU and remaining storage space of the node ECU.

If the master ECU determines, based on a size of remaining storage space of each node ECU and a size of a software package of each node ECU, that each node ECU has sufficient storage space to store the software package of each node ECU, the master ECU sends a notification message to the OTA server, so that the OTA server sends the software packages to the node ECUs.

In an example, it is assumed that the node ECUs include only the node ECU 1 and the node ECU 2. There may be the following three cases:
1. If the remaining storage space of the node ECU 1 obtained by the master ECU is not less than a size of a software package of the node ECU 1, and the obtained remaining storage space of the ECU 2 is not less than a size of a software package of the ECU 2, the master ECU sends a notification message to the OTA server, so that the OTA server sends the software package of the node ECU 1 to the node ECU 1, and the OTA server sends the software package of the node ECU 2 to the node ECU 2.
2. If the remaining storage space of the node ECU 1 obtained by the master ECU is not less than a size of a software package of the node ECU 1, and the obtained remaining storage space of the node ECU 2 is less than a size of a software package of the node ECU 2, the master ECU does not send a notification message to the OTA server. That is, a software package download procedure is not started.
3. If the remaining storage space of the node ECU 1 obtained by the master ECU is less than a size of a software package of the node ECU 1, and the obtained remaining storage space of the node ECU 2 is not less than a size of a software package of the node ECU 2, the master ECU does not send a notification message to the OTA server. That is, a software package download procedure is not started.

805: The OTA server invokes a TransferData interface of the node ECU 1.

In a possible implementation, step 806 may be further included: The node ECU 1 returns an invocation result of the TransferData interface of the node ECU 1.

807: The OTA server invokes a TransferData interface of the node ECU 2.

In a possible implementation, step 808 may be further included: The node ECU 2 returns an invocation result of the TransferData interface of the node ECU 2.

For understanding of step 805 to step 808, refer to step 406, step 408, step 411, and step 412 in the embodiment corresponding to FIG. 4.

The foregoing describes the data transmission method provided in the embodiments of this application. An embodiment of this application further provides a data transmission sy stem. The data transmission system includes an OTA server, a master ECU, and a plurality of node ECUs. The OTA server is the OTA server described in the embodiments corresponding to FIG. 4 to FIG. 7b, the master ECU is the master ECU described in the embodiments corresponding to FIG. 4 to FIG. 7b, and the node ECU is the node ECU described in the embodiments corresponding to FIG. 4 to FIG. 7b. For example, refer to the node ECU 1 and the node ECU 2 for understanding. In addition, based on a same inventive concept as the foregoing embodiments, an embodiment of this application further provides an OTA cloud server, a master ECU, and a node ECU. The following describes a data transmission system provided in an embodiment of this application with reference to several specific implementations.

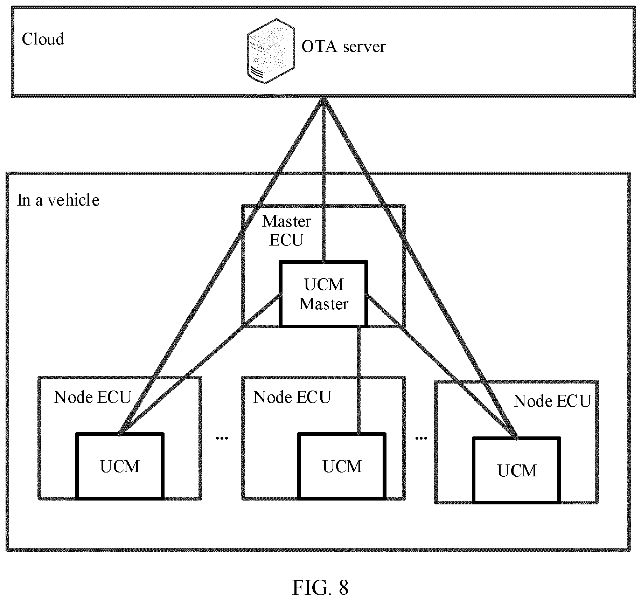

FIG. 8 is a schematic diagram of an architecture of a data transmission system according to an embodiment of this application. The data transmission system includes an OTA server, a master ECU, and a plurality of node ECUs.

The node ECU may include an update and configuration management UCM module. The UCM module of the node ECU is configured to: when learning that a target interface of the node ECU is invoked, check remaining storage space, and return a first invocation result. A parameter value of the target interface may include a size of a software package of the node ECU. The first invocation result indicates whether the remaining storage space is not less than the size of the software package of the node ECU. The UCM module of the node ECU is further configured to: when the remaining storage space is not less than the size of the software package of the node ECU, receive the software package of the node ECU sent by the OTA server.

In a possible implementation, when the target interface is a TransferStart interface, and the remaining storage space is not less than the size of the software package of the node ECU, the first invocation result may include a first parameter value. The first parameter is used to indicate the OTA server to send the software package of the node ECU to the node ECU.

In a possible implementation, the UCM module of the node ECU is further configured to obtain a download address of the software package of the node ECU, and invoke an interface of the OTA server based on the obtained download address. A parameter value of the interface is the download address of the software package of the node ECU, so that the OTA server sends the software package of the node ECU to the UCM module in response to a fact that the interface is invoked.

In a possible implementation, the OTA server may include an update and configuration management UCM module. The UCM module of the OTA server is configured to: when determining that the remaining storage space of the node ECU is not less than the size of the software package of the node ECU, invoke a TransferData interface of the node ECU, to send the software package of the node ECU to the node ECU.

In a possible implementation, the UCM module of the OTA server is specifically configured to: when obtaining the first parameter value, invoke the TransferData interface of the node ECU. The first parameter value is a parameter value that may be included in the first invocation result returned by the node ECU in response to a fact that the TransferStart interface is invoked. The first parameter value is used to indicate that the remaining storage space of the node ECU is not less than the size of the software package of the node ECU.

In a possible implementation, the UCM module of the OTA server is further configured to invoke an entire vehicle software package TransferVehiclePackage interface of the master ECU. A parameter value of the TransferVehiclePackage interface may include a download address of a software package of each node ECU in the plurality of node ECUs, so that the master ECU sends the download address of the software package of the node ECU to the node ECU, and then the node ECU invokes an interface of the UCM module based on the download address of the node ECU, where a parameter of the interface may include the download address of the software package of the node ECU. The UCM module is specifically configured to send the software package of the node ECU to the node ECU in response to a fact that the node ECU invokes the interface.

In a possible implementation, the master ECU may include a UCM Master module. The UCM Master module is configured to invoke the target interface of the node ECU. A parameter value of the target interface may include the size of the software package of the node ECU, so that the node ECU checks the remaining storage space of the node ECU in response to a fact that the master ECU invokes the target interface. The UCM Master module is further configured to receive the first invocation result of the target interface sent by the node ECU. The first invocation result indicates whether the remaining storage space of the node ECU is not less than the size of the software package of the node ECU.

In a possible implementation, when the remaining storage space of the node ECU is not less than the size of the software package of the node ECU, the first invocation result may include a first parameter value, and the UCM Master module is further configured to send a first feedback message to the OTA server. The first feedback message may include the first parameter value, so that the OTA server invokes a TransferData interface of the node ECU when obtaining the first parameter value, to send the software package of the node ECU to the node ECU.

In a possible implementation, the UCM Master module is further configured to receive a first invocation result of each node ECU in the plurality of node ECUs. The node ECU is any one of the plurality of node ECUs. When it is determined, based on the first invocation result, that the remaining storage space of each node ECU is not less than the size of the software package of each node ECU, a second parameter value is sent to the OTA server, so that the OTA server invokes a TransferData interface of the node ECU when obtaining the second parameter value.

An embodiment of this application further provides an ECU. The ECU is the node ECU in the embodiment corresponding to FIG. 8. For understanding, refer to the node ECU described in the embodiments corresponding to FIG. 4 to FIG. 7b.

An embodiment of this application further provides an ECU. The ECU is the master ECU in the embodiment corresponding to FIG. 8. For understanding, refer to the master ECU described in the embodiments corresponding to FIG. 4 to FIG. 7b.

An embodiment of this application further provides an OTA server. The OTA server is the OTA server in the embodiment corresponding to FIG. 8. For understanding, refer to the OTA server described in the embodiments corresponding to FIG. 4 to FIG. 7b.

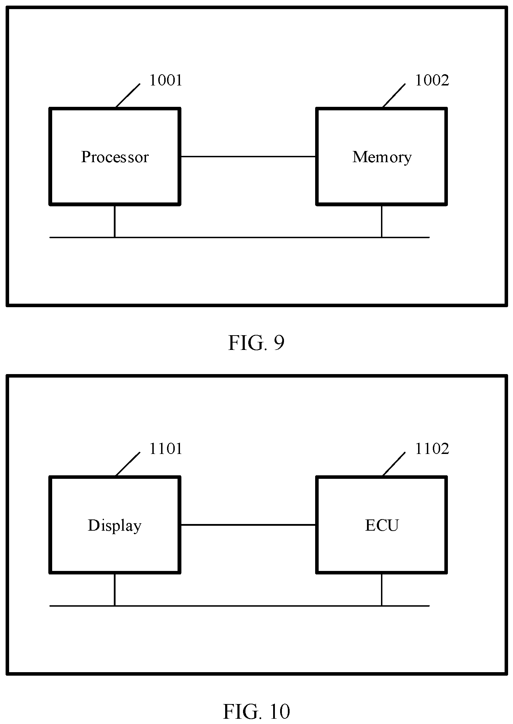

Refer to FIG. 9. An embodiment of this application further provides a communications device. The communications device may be the node ECU in the embodiments corresponding to FIG. 4 to FIG. 7b, or the communications device may be the master ECU in the embodiments corresponding to FIG. 4 to FIG. 7b, or the communications device may be the OTA server in the embodiments corresponding to FIG. 4 to FIG. 7b.

The communications device may include a processor 1001. The processor 1001 is coupled to a memory 1002, and the memory stores a program instruction. When the program instruction stored in the memory is executed by the processor, the steps performed by the master ECU in the embodiments corresponding to FIG. 4 to FIG. 7b are performed. Alternatively, when the program instruction stored in the memory is executed by the processor, the steps performed by the node ECU in the embodiments corresponding to FIG. 4 to FIG. 7b are performed. Alternatively, when the program instruction stored in the memory is executed by the processor, the steps performed by the OTA server in the embodiments corresponding to FIG. 4 to FIG. 7b are performed.

An embodiment of this application further provides a vehicle. FIG. 10 is a schematic diagram of a structure of a vehicle according to an embodiment of this application. The node ECU and the master ECU described in the embodiments corresponding to FIG. 4 to FIG. 7b may be deployed on the vehicle.

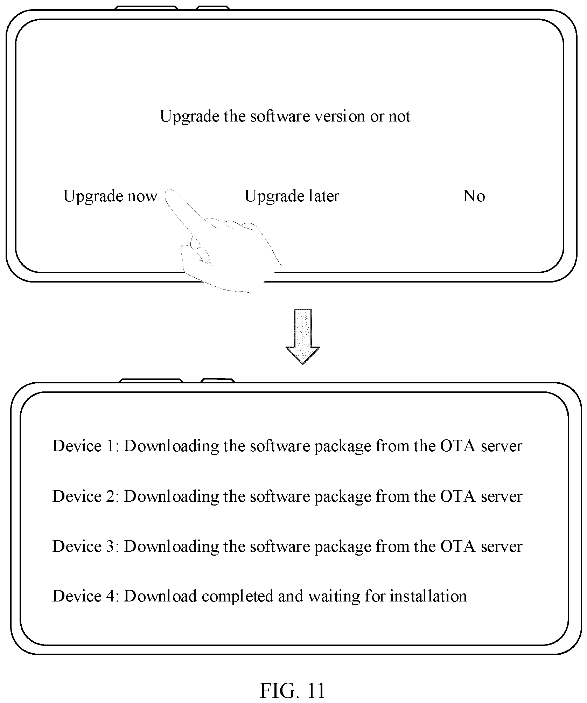

In a possible implementation, as shown in FIG. 10, the vehicle may include a display 1101 and an ECU 1102. The ECU 1102 is the node ECU or the master ECU described in the embodiments corresponding to FIG. 4 to FIG. 7b. The vehicle may interact with a user by using the display, for example, may send a prompt message by using the display. The prompt message is used to indicate the node ECU to download a software package of the first ECU from an OTA server. FIG. 11 is a schematic diagram of an application scenario of a data transmission method according to an embodiment of this application. In the solution provided in this embodiment of this application, a user is allowed to select whether to upgrade in-vehicle software, or in-vehicle software may be directly upgraded by default. When each device in the vehicle is upgraded, in a specific process of downloading an upgrade package of software of each ECU, a prompt message is sent to prompt that each device is downloading a software package from the OTA server.

The vehicle may be a car, a truck, a motorcycle, a bus, a boat, a lawn mower, a recreational vehicle, a playground vehicle, a construction device, a trolley, a golf cart, or the like. This is not specifically limited in this embodiment of this application.

It should be noted that, for a specific implementation in which an ECU and a vehicle perform the data transmission method and brought beneficial effects, refer to the descriptions in the method embodiments corresponding to FIG. 4 to FIG. 7b. Details are not described herein again.

An embodiment of this application further provides a computer-readable storage medium. The computer-readable storage medium stores a program used for downloading a software package. When the program is run on a computer, the computer is enabled to perform the steps performed by the ECU in the methods described in the embodiments shown in FIG. 4 to FIG. 7b.

An embodiment of this application further provides a computer-readable storage medium. The computer-readable storage medium stores a program used for downloading a software package. When the program is run on a computer, the computer is enabled to perform the steps performed by the OTA in the methods described in the embodiments shown in FIG. 4 to FIG. 7b.

An embodiment of this application further provides a computer program product. When the computer program product is run on a computer, the computer is enabled to perform the steps performed by the ECU in the methods described in the embodiments shown in FIG. 4 to FIG. 7b. Alternatively, when the computer program product is run on a computer, the computer is enabled to perform the steps performed by the OTA in the methods described in the embodiments shown in FIG. 4 to FIG. 7b. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

An embodiment of this application further provides a circuit system. The circuit system includes a processing circuit and a storage circuit. The processing circuit and the storage circuit are configured to perform steps performed by the ECU or the OTA server in the methods described in the embodiments shown in FIG. 4 to FIG. 7b. The processing circuit may be any suitable type of computing unit, for example, a microprocessor, a digital signal processor (digital signal processor, DSP), a field programmable gate array (field programmable gate array, FPGA), or an application-specific integrated circuit (application-specific integrated circuit, ASIC) or any other form of circuit. The storage circuit may be volatile (volatile) and/or non-volatile (non-volatile). For example, the storage circuit may be a register, a cache, or the like. Specifically, the volatile storage circuit may include a cache memory, and the non-volatile storage circuit may include a flash memory.

The ECU or the OTA server provided in the embodiments of this application may be specifically a chip. The chip includes a processing unit and a communications unit. The processing unit may be, for example, a processor, and the communications unit may be, for example, an input/output interface, a pin, or a circuit. The processing unit may execute computer-executable instructions stored in a storage unit, so that the chip in the server performs the data transmission method described in the embodiments shown in FIG. 4 to FIG. 7b. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, in other words, may be located in one position, or may be distributed on a plurality of network units. Some or all of the modules may be selected according to an actual requirement to achieve the objectives of the solutions of the embodiments. In addition, in the accompanying drawings of the apparatus embodiments provided in this application, connection relationships between modules indicate that the modules have communication connections to each other, which may be specifically implemented as one or more communications buses or signal cables.

According to the descriptions of the foregoing implementations, a person skilled in the art may clearly understand that this application may be implemented by software in addition to necessary universal hardware, or by dedicated hardware, including an application-specific integrated circuit, a dedicated CLU, a dedicated memory, a dedicated component, and the like. Generally, any functions performed by a computer program can be easily implemented by using corresponding hardware, and a specific hardware structure used to achieve a same function may be of various forms, for example, in a form of an analog circuit, a digital circuit, an application-specific circuit, or the like. However, for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or a compact disc of a computer, and includes several instructions for instructing a computer device (which may be a personal computer, a server, a network device, or the like) to perform the methods described in the embodiments of this application.

## Claims

1. A data transmission system, wherein the data transmission system comprises an over the air OTA server, a master electronic control unit ECU, and a node ECU;
the OTA server is configured to invoke a first interface of the master ECU;
the master ECU is configured to obtain a size of a target software package in response to a fact that the OTA server invokes the first interface;
the master ECU is further configured to invoke a second interface of the node ECU; and
the node ECU is configured to: in response to a fact that the master ECU invokes the second interface, obtain the size of the target software package and check remaining storage space of the node ECU, and when the remaining storage space is not less than the size of the target software package, receive the target software package sent by the OTA server.

2. The data transmission system according to claim 1, wherein
the node ECU is further configured to return a first invocation result to the master ECU, wherein the first invocation result comprises a first parameter value, and the first parameter value is used to indicate that the remaining storage space of the node ECU is not less than the size of the target software package;
the master ECU is further configured to invoke a third interface of the OTA server when obtaining the first parameter value; and
the OTA server is further configured to send the target software package to the node ECU in response to a fact that the master ECU invokes the third interface.

3. The data transmission system according to claim 2, wherein a quantity of node ECUs is N, and N is an integer greater than 1; and
the master ECU is specifically configured to invoke the third interface of the OTA server when obtaining N first parameter values.

4. The data transmission system according to claim 1, wherein
the master ECU is further configured to obtain a download address of the target software package in response to a fact that the OTA server invokes the first interface;
the node ECU is further configured to return a first invocation result to the master ECU, wherein the first invocation result comprises a first parameter value, and the first parameter value is used to indicate that the remaining storage space of the node ECU is not less than the size of the target software package;
the master ECU is further configured to invoke a fourth interface of the node ECU when obtaining the first parameter value;
the node ECU is further configured to: in response to a fact that the master ECU invokes the fourth interface, obtain the download address of the target software package and invoke a fifth interface of the OTA server; and
the OTA server is further configured to: in response to a fact that the node ECU invokes the fifth interface, receive the download address and send the target software package to the node ECU according to the download address.

5. The data transmission system according to claim 4, wherein a quantity of node ECUs is N, and N is an integer greater than 1; and
the master ECU is specifically configured to invoke fourth interfaces of the node ECUs when obtaining N first parameter values.

6. An over the air OTA server, wherein the OTA server comprises an update and configuration management UCM module; and
the UCM module is configured to invoke a first interface of a master ECU, so that the master ECU obtains a size of a target software package in response to a fact that the OTA server invokes the first interface, and the master ECU invokes a second interface of a node ECU, so that the node ECU obtains the size of the target software package and checks remaining storage space of the node ECU in response to a fact that the master ECU invokes the second interface, and when the remaining storage space is not less than the size of the target software package, the node ECU receives the target software package sent by the OTA server.

7. The OTA server according to claim 6, wherein
the UCM module is further configured to send the target software package to the node ECU in response to a fact that the master ECU invokes a third interface of the UCM module, wherein the third interface is an interface that is of the UCM module and that is invoked by the master ECU when the master ECU obtains a first parameter value, the first parameter value is a parameter value comprised in a first invocation result returned by the node ECU to the master ECU, and the first parameter value is used to indicate that the remaining storage space of the node ECU is not less than the size of the target software package.

8. The OTA server according to claim 6, wherein
the UCM module is further configured to invoke the first interface of the master ECU, so that the master ECU obtains a download address of the target software package in response to a fact that the OTA server invokes the first interface, and then the node ECU obtains the download address of the target software package and invokes a fifth interface of the OTA server in response to a fact that the master ECU invokes a fourth interface; and
the UCM module is further configured to: receive the download address of the target software package and send the target software package to the node ECU according to the download address in response to a fact that the node ECU invokes the fifth interface of the UCM module.

9. A master electronic control unit ECU, wherein the master ECU comprises an update and configuration management master UCM Master module;
the UCM Master module is configured to obtain a size of a target software package in response to a fact that an OTA server invokes a first interface of the UCM Master module; and
the UCM Master module is further configured to invoke a second interface of a node ECU, so that the node ECU obtains the size of the target software package and checks remaining storage space of the node ECU in response to a fact that the second interface is invoked, and when the remaining storage space is not less than the size of the target software package, the node ECU receives the target software package sent by the OTA server.

10. The master ECU according to claim 9, wherein
the UCM Master module is further configured to invoke a third interface of the OTA server when obtaining a first parameter value, so that the OTA server sends the target software package to the node ECU in response to a fact that the third interface is invoked, wherein the first parameter value is a parameter value comprised in a first invocation result returned by the node ECU to the master ECU, and the first parameter value is used to indicate that the remaining storage space of the node ECU is not less than the size of the target software package.

11. The master ECU according to claim 10, wherein a quantity of node ECUs is N, and N is an integer greater than 1; and
the UCM Master module is specifically configured to invoke the third interface of the OTA server when obtaining N first parameter values.

12. The master ECU according to claim 9, wherein
the UCM Master module is further configured to obtain a download address of the target software package in response to a fact that the OTA server invokes the first interface; and
the UCM Master module is further configured to invoke a fourth interface of the node ECU when obtaining a first parameter value, so that the node ECU obtains the download address and invokes a fifth interface of the OTA server in response to a fact that the fourth interface is invoked, and then the OTA server receives the download address and sends the target software package to the node ECU according to the download address in response to a fact that the fifth interface is invoked, wherein the first parameter value is a parameter value comprised in a first invocation result returned by the node ECU to the master ECU, and the first parameter value is used to indicate that the remaining storage space of the node ECU is not less than the size of the target software package.

13. The master ECU according to claim 12, wherein a quantity of node ECUs is N, and N is an integer greater than 1; and
the UCM Master module is specifically configured to invoke fourth interfaces of the node ECUs when obtaining N first parameter values.

14. A node electronic control unit ECU, wherein the node ECU comprises an update and configuration management UCM module; and
the UCM module is configured to: in response to a fact that a master ECU invokes a second interface of the UCM module after a first interface of the master ECU is invoked, obtain a size of a target software package and check remaining storage space of the node ECU, and when the remaining storage space is not less than the size of the target software package, receive the target software package sent by an OTA server, wherein the first interface of the master ECU is invoked by the OTA server, so that the master ECU obtains the size of the target software package in response to a fact that the first interface is invoked.

15. The node ECU according to claim 14, wherein
the UCM module is further configured to return a first invocation result to the master ECU, wherein the first invocation result comprises a first parameter value, and the first parameter value is used to indicate that the remaining storage space of the node ECU is not less than the size of the target software package, so that the master ECU invokes a third interface of the OTA server when obtaining the first parameter value, and then the OTA server sends the target software package to the node ECU in response to a fact that the master ECU invokes the third interface.

16. The node ECU according to claim 14, wherein
the UCM module is further configured to return a first invocation result to the master ECU, wherein the first invocation result comprises a first parameter value, and the first parameter value is used to indicate that the remaining storage space of the node ECU is not less than the size of the target software package, so that the master ECU invokes a fourth interface of the node ECU when obtaining the first parameter value; and
the UCM module is further configured to: in response to a fact that the master ECU invokes the fourth interface, obtain a download address of the target software package and invoke a fifth interface of the OTA server, so that the OTA server receives the download address and sends the target software package to the node ECU according to the download address in response to a fact that the fifth interface is invoked.

17. A data transmission method, comprising:
invoking, by an OTA server, a first interface of a master ECU, so that the master ECU obtains a size of a target software package in response to a fact that the OTA server invokes the first interface, and the master ECU invokes a second interface of a node ECU, so that the node ECU obtains the size of the target software package and checks remaining storage space of the node ECU in response to a fact that the master ECU invokes the second interface, and when the remaining storage space is not less than the size of the target software package, the node ECU receives the target software package sent by the OTA server.

18. The data transmission method according to claim 17, wherein the method further comprises:
sending, by the OTA server, the target software package to the node ECU in response to a fact that the master ECU invokes a third interface of the UCM module, wherein the third interface is an interface that is of the OTA server and that is invoked by the master ECU when the master ECU obtains a first parameter value, the first parameter value is a parameter value comprised in a first invocation result returned by the node ECU to the master ECU, and the first parameter value is used to indicate that the remaining storage space of the node ECU is not less than the size of the target software package.

19. The data transmission method according to claim 17, wherein the method further comprises:
invoking, by the OTA server, the first interface of the master ECU, so that the master ECU obtains a download address of the target software package in response to a fact that the OTA server invokes the first interface, and then the node ECU obtains the download address of the target software package and invokes a fifth interface of the OTA server in response to a fact that the master ECU invokes a fourth interface; and
in response to a fact that the node ECU invokes the fifth interface of the UCM module, receiving, by the OTA server, the download address of the target software package and sending the target software package to the node ECU according to the download address.

20. A data transmission method, comprising:
obtaining, by a master ECU, a size of a target software package in response to a fact that an OTA server invokes a first interface of a UCM Master module; and
invoking, by the master ECU, a second interface of a node ECU, so that the node ECU obtains the size of the target software package and checks remaining storage space of the node ECU in response to a fact that the second interface is invoked, and when the remaining storage space is not less than the size of the target software package, the node ECU receives the target software package sent by the OTA server.

21. The data transmission method according to claim 20, wherein the method further comprises:
invoking, by the master ECU, a third interface of the OTA server when obtaining a first parameter value, so that the OTA server sends the target software package to the node ECU in response to a fact that the third interface is invoked, wherein the first parameter value is a parameter value comprised in a first invocation result returned by the node ECU to the master ECU, and the first parameter value is used to indicate that the remaining storage space of the node ECU is not less than the size of the target software package.

22. The data transmission method according to claim 21, wherein a quantity of node ECUs is N, and N is an integer greater than 1; and
the invoking, by the master ECU, a third interface of the OTA server when obtaining a first parameter value comprises:
invoking, by the master ECU, the third interface of the OTA server when obtaining N first parameter values.

23. The data transmission method according to claim 20, wherein the method further comprises:
obtaining, by the master ECU, a download address of the target software package in response to a fact that the OTA server invokes the first interface; and
invoking, by the master ECU, a fourth interface of the node ECU when obtaining a first parameter value, so that the node ECU obtains the download address and invokes a fifth interface of the OTA server in response to a fact that the fourth interface is invoked, and then the OTA server receives the download address and sends the target software package to the node ECU according to the download address in response to a fact that the fifth interface is invoked, wherein the first parameter value is a parameter value comprised in a first invocation result returned by the node ECU to the master ECU, and the first parameter value is used to indicate that the remaining storage space of the node ECU is not less than the size of the target software package.

24. The data transmission method according to claim 23, wherein a quantity of node ECUs is N, and N is an integer greater than 1; and
the invoking, by the master ECU, a fourth interface of the node ECU when obtaining a first parameter value comprises:
invoking, by the master ECU, fourth interfaces of the node ECUs when obtaining N first parameter values.

25. A data transmission method, comprising:
in response to a fact that a master ECU invokes a second interface of a UCM module after a first interface of the master ECU is invoked, obtaining, by a node ECU, a size of a target software package and checking remaining storage space of the node ECU; and when the remaining storage space is not less than the size of the target software package, receiving the target software package sent by an OTA server, wherein the first interface of the master ECU is invoked by the OTA server, so that the master ECU obtains the size of the target software package in response to a fact that the first interface is invoked.

26. The data transmission method according to claim 25, wherein the method further comprises:
returning, by the node ECU, a first invocation result to the master ECU, wherein the first invocation result comprises a first parameter value, and the first parameter value is used to indicate that the remaining storage space of the node ECU is not less than the size of the target software package, so that the master ECU invokes a third interface of the OTA server when obtaining the first parameter value, and then the OTA server sends the target software package to the node ECU in response to a fact that the master ECU invokes the third interface.

27. The data transmission method according to claim 25, wherein the method further comprises:
returning, by the node ECU, a first invocation result to the master ECU, wherein the first invocation result comprises a first parameter value, and the first parameter value is used to indicate that the remaining storage space of the node ECU is not less than the size of the target software package, so that the master ECU invokes a fourth interface of the node ECU when obtaining the first parameter value; and
in response to a fact that the master ECU invokes the fourth interface, obtaining, by the node ECU, a download address of the target software package and invoking a fifth interface of the OTA server, so that the OTA server receives the download address and sends the target software package to the node ECU according to the download address in response to a fact that the fifth interface is invoked.

28. A computer-readable storage medium, comprising a program, wherein when the program is run on a computer, the computer is enabled to perform the method according to any one of claims 17 to 19.

29. A computer-readable storage medium, comprising a program, wherein when the program is run on a computer, the computer is enabled to perform the method according to any one of claims 20 to 24.

30. A computer-readable storage medium, comprising a program, wherein when the program is run on a computer, the computer is enabled to perform the method according to any one of claims 25 to 27.

31. An intelligent vehicle, wherein the intelligent vehicle comprises a master electronic control unit ECU and a node ECU, the master ECU is the master ECU according to any one of claims 9 to 13, and the node ECU is the node ECU according to any one of claims 14 to 16.
